(19) Europäisches Patentamt
European Patent Office
Office européen des brevets

(11) Publication number: **0 211 078 B1**

(12) **EUROPEAN PATENT SPECIFICATION**

(45) Date of publication of patent specification: **21.03.90**

(51) Int. Cl.$^5$: **G 01 N 29/00,** G 01 L 1/00

(21) Application number: **85900738.7**

(22) Date of filing: **16.01.85**

(86) International application number: **PCT/JP85/00013**

(87) International publication number: **WO 86/04414 31.07.86 Gazette 86/17**

# (54) METHOD OF MEASURING STRESS CONCENTRATION COEFFICIENT WITH ULTRASONIC WAVE.

(43) Date of publication of application: **25.02.87 Bulletin 87/09**

(45) Publication of the grant of the patent: **21.03.90 Bulletin 90/12**

(84) Designated Contracting States: **DE FR GB**

(56) References cited:
EP-A-0 116 644
GB-A-2 138 138
JP-A- 585 625
US-A-4 080 836

JOURNAL OF PHYSICS AND CHEMISTRY OF SOLIDS, vol. 31, no. 8, August 1970, pages 1955-1956, Pergamon Press, GB; W. SACHSE et al.: "Deformation rate effects on the attenuation during loading, unloading, and reloading of aluminum crystals"

(73) Proprietor: **HITACHI CONSTRUCTION MACHINERY CO., LTD.**
**6-2, Ohtemachi 2-chome**
**Chiyoda-ku Tokyo 100 (JP)**

(72) Inventor: **MIYAJIMA, Takeshi**
**1801 Banchi Oaza Sakayori, Makabemachi**
**Makabe-gun Ibaraki 300-44 (JP)**

(74) Representative: **Waxweiler, Jean et al**
**OFFICE DENNEMEYER S.à.r.l. P.O. Box 1502**
**L-1015 Luxembourg (LU)**

**EP 0 211 078 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

a) Field of the invention:

The present invention relates to a method of measuring, by utilizing ultrasound, the factor of stress concentration at the portion of a mechanical member, structural member or the like where stress is concentrated (will be referred to as "stress-concentrated portion" hereinafter).

The stress-concentrated portions of members, to which the present invention is applicable, include structural notched or cut portions such as hole, key way formed in members composing, for example, machineries, structures, etc. in all fields of industry, as well as undercut, blow hole, nest, crack, etc. developed in the manufacturing processes such as welding, forging, molding, etc. Also, they include the portions of materials, like flaw, crack, etc., of which the section varies abruptly.

More particularly, the present invention concerns a method of measuring the factor of stress concentration at the stress-concentrated portion of a member made of a metal or nonmetal (glass, ceramic, synthetic resin, etc.) and through which ultrasound can be propagated.

b) Description of the prior art:

Analysis concerning the stress-concentrated portion of a member, and setting of a factor of stress concentration at such portion, among others, are essential in designing and manufacturing a machine or structure in order to prevent any breakdown or damage of them and also to improve the safety and reliability. In the field of technology to which the present invention belongs, however, the method of measuring the factor of stress concentration of a real object easily, real-time and quantitatively is very important and necessary, but has not yet been established, for analysis of the stress concentration at the portions joined by the welding having been utilized from the old time and of which the application is very wide, and even for analysis of the stress concentration at the structural notched or cut portions of mechanical parts, typically, hole or key way formed by utilizing no welding and of which, it is said, the study has been highly advanced. It is very hard to theoretically analyze the mechanism of stress concentration even in these fields.

To solve the above problem, various methods of measuring the factor of stress concentration have been proposed. However, they include only the experimental methods of measuring using the photo-elasticity. That is, model experiments were made for analysis and study of only the typical models such as those in which circular holes or elliptical cavities were developed inside or on the surface of an elastic object like steel or in which U- and V-shaped notches were found on the surface of such object. These proposed methods were static, qualitative and indirect ones, and they were reported by H. Neuber and R. B. Heywood in 1958.

However, since the notches developed in the surface of bead weld vary in shape from one to another depending upon the method and kind of welding and also the shape of welded joint, the reproducibility can hardly be expected of the conventional method of measuring the factor of stress concentration at the weld zone. Therefore, it is practically impossible to condition any test piece of a weld zone into a predetermined model. In measurement of the factor of stress concentration at the welded portion, even the method of measuring by using the photo-elasticity, namely, a static, qualitative and indirect one, has some problems in applications and it is diffciult to employ the method, as will be explained below.

(1) Although it is necessary to prepare a model as test piece, this modeling is impossible in practice for the above reasons.

(2) Even if such model could be prepared, since it is to be made from a material such as high-molecular epoxy resin, diarylphthalate resin or the like, differences in material, dimensions, working precision, etc. from the actual test piece are inevitably encountered which will also affect the fringe order of the stress-concentrated portion, resulting in no stable fringe order.

(3) Because of the material properties of the model, it is extremely difficult to make any acute-angle notch and so the reproduction of any stress concentration which will occur in the actual object is not expectable.

As a method of measuring the factor of stress concentration using no photo-elasticity, use of an electric resistance strain gauge (will be referred to as "strain gauge" hereinafter) is known, however, the strain gauge cannot be attached in any acute-angle notch. Even if the notch has an area wide enough to receive the strain gauge, the attaching of the strain gauge will cause of the stress-concentrated portion to have the properties changed. Thus, this method is also disadvantageous in impossibility of measuring any real factor of stress concentration. Namely, it is just an experimental method of measuring and has not been prevailing.

On the other hand, the ultrasound is utilized for various kinds of measurement, such as size of any defect in the material. Heretofore, a method of measuring or inspecting the state of a member by creating stress in the member is known from, for example, GB—A—2138138. The method disclosed in this Patent is intended to detecting stress sensitive discontinuities in an object body and comprises the steps of subjecting the body to alternating or changing stress, directing ultrasonic signals into the body, detecting ultrasonic signals returning from the body, storing the said signals and comparing the stored signals corresponding to returning signals at one level of the alternating stress with those originating at another level of the alternating stress, thereby to eliminate those return signals which do not vary in accordance with the applied stress. This method of measurement is worked out based on the fact that the reflectivity for ultrasound of a crack in a body varies with the compressive load applied to the body, which causes the crack to tend to close. It seems that this method permits to detect whether or not any crack exists and estimate the size of the crack (area of the lateral side thereof).

Also, the Applicant of the present invention proposed an invention specified in the European Patent Application No. 82900997.6 (Publication No. 0116644) disclosing "Method of measuring the contact stress at the contacting surface of solids of the same or different type by utilizing ultrasonic waves, which comprises the steps of introducing the ultrasonic waves into the contacting surfaces, comparing the sound pressure of the waves reflected from the contacting surfaces with that of waves transmitted through the contacting surfaces, and measuring the contact stress using the compared value as an evaluation index".

As described in the above, the ultrasound is utilized in various kinds of measurement, but heretofore, a method of effectively measuring the factor of stress concentration in a member having a portion or portions where stress is possibly concentrated has not yet been proposed.

The present invention primarily seeks to provide a method of measuring, by utilizing ultrasound, the factor of stress concentration at the stress-concentrated portion of a mechanical or structural member, by which anyone can real-time measure the factor of stress concentration easily, quantitatively and with a high accuracy without changing the state in which the stress continuously acts on the stress-concentrated portion (will be referred to as "stressed state" hereinafter) and the nature of the portion in the stressed state.

Also the present invention seeks to provide a method of measuring the factor of stress concentration, which can measure the factor of a static stress concentration for an extremely short time (a few seconds) and also the factor of a dynamic stress concentration directly.

Furthermore, the present invention seeks to provide a method of measuring the factor of stress concentration, which can always provide for a highly accurate, quantitative measurement without being influenced by the shape and roughness of the surface on which the ultrasound probe is placed and even with more or less difference in placement of the probe.

The above objects are attainable by providing a method of determining, as an evaluation factor, the factor of stress concentration in a member by applying a load to the member having a stress-concentrated portion, transmitting an ultrasonic wave into the member from an ultrasound transmission/reception probe, receiving reflected waves resulted from the incident ultrasonic wave having passed through the member and reached the surface of the member, and measuring the sound pressure of the reflected wave, comprising the steps of transmitting an ultrasonic wave into the loaded member toward the stress-concentrated portion; measuring, by the ultrasound transmission/reception probe, a reflected wave from the stress-concentrated portion and measuring the sound pressure of the reflected wave; increasing or decreasing the stress at the stress-concentrated portion by increasing or decreasing said load to create a plurality of increased or decreased stresses in said member; transmitting an ultrasonic wave into the member toward the stress-concentrated portion with the plurality of increased or decreased stresses; receiving reflected waves from said stress-concentrated portion with the increased or decreased stresses by said ultrasound transmission/reception probe, and measuring the sound pressures of the reflected waves; and determining a gradient of difference in sound pressure between the reflected waves corresponding to the increase or decrease of the load, thereby determining the factor of stress concentration in said member taking the gradient as an evaluation index.

This characteristic of the present invention is to utilize the fact that when a member to be measured is continuously stressed and ultrasound is emitted for incidence upon the stress-concentrated portion of the member, there is a correlation between the change in acoustic pressure of the reflected ultrasonic wave from said stress-concentrated portion and the stress working on the stress-concentrated portion (will be referred to as "working stress" hereinafter).

The Applicant of the present invention found the fact that when an ultrasonic wave is transmitted into an object having a shape due to which stress is apt to be concentrated at portion or portions, toward such portion while a stress is applied to the object, the intensity of the echo wave of the ultrasound from the stress-concentrated portion decreases as the stress increases. Also the Applicant confirmed by experiments that the acting stress and the intensity of the echo wave of ultrasound are in a linear inverse proportion to each other until the elastic limit of the object is reached. Further, the results of a same test applied to test pieces different in radius of curvature of stress-concentrated portions proved that the constant of proportion of the inverse-proportional relation is a fixed function of the radius of curvature. The characteristic of the present invention is the capability of determining, by using this functional relation, the factor of stress concentration even in case it is difficult or impossible to measure the factor. That is, as the factor of stress concentration is a function of the radius of curvature of the stress-concentrated portion, the above-mentioned constant of proportion is also in the functional relation with the factor of stress concentration.

Figures 1 to 3 explain the basic principle of the inventive method of measuring the factor of stress concentration. In these Figures, the reference numeral 1 indicates a member to be measured, 2 a stress-concentrated portion of the member 1, 3 a probe secured by an adhesive on the surface of the member 1 and which emits an ultrasound for incidence toward the stress-concentrated portion 2, 4 an incident wave of the ultrasound $P_0$ acoustic pressure of the incident wave, and 5 a reflection, or reflected wave, of the incidènt wave 4 from the stress-concentrated portion 2, this reflected wave being received by the probe 3.

When a tensile force $F_1$ acts on the to-be-measured member within the limits of elasticity, a tensile stress develops in the member 1, a mean stress $\sigma_{n1}$ obtained by diving the tensile force $F_1$ by a minimum sectional area, namely, an area except for the stress-concentrated portion 2, of the to-be-measured member 1 is distributed, and a maximum local stress $\sigma_{max}$ corresponding to the tensile stress $F_1$ develops in the notched bottom of the stress-concentrated portion 2. By emitting an ultrasound under an acoustic pressure $P_0$ from the probe 3 for incidence toward the stress-concentrated zone 2 in the above condition, the incident wave 4 reaches the stress-concentrated portion 2, reflected there and received as a reflected wave 5 of the acoustic pressure $P_1$ by the probe 3. Next, by increasing the tensile force $F_1$ up to $F_2$, the mean stress $\sigma_{n1}$ increases up to a mean stress $\sigma_{n2}$. The result of a microscopic observation of the change in shape of the notched bottom *a* of the stress-concentrated portion 2 due to the increase in mean stress from $\sigma_{n1}$ to $\sigma_{n2}$ is shown in Figures 2 and 3. In Figure 2, the mean stress is $\sigma_{n1}$, the notched bottom retains its initial shape and the acoustic pressures of the incident wave 4 and reflected wave 5, respectively, are $P_0$ and $P_1$, respectively. Figure 3 shows a case in which the mean stress is increased to $\sigma_{n2}$ with the notched bottom elastoplastically changed in shape, showing the changes in shape, area, etc. which influence the acoustic pressure of the reflected wave 5. The incident wave 4 emitted under the acoustic pressure $P_0$ is so influenced by the plastoelastical deformation of the notched bottom of the stress-concentrated portion 2 as to have the acoustic pressure decreased, and thus the incident wave becomes a reflected wave 5 of an acoustic pressure $P_2$ which is to be received by the probe 3. As the mean stress changes, the acoustic pressure changes correspondingly in this manner. The greater the factor of stress concentration, the larger the elastic deformation of the notched bottom of the stress-concentrated portion 2 and also the change in acoustic pressure of the reflected wave. The inventive method of measuring is such that when a stress works on the member to be measured, the factor of stress concentration is measured from the rate of change in acoustic pressure of the reflected ultrasonic wave caused by the elastic deformation at the stress-concentrated portion.

The basic principle of the inventive method was proved by the experiments as follows.

It will be explained with reference to Figures 4 to 15. A portion of the test piece used in the experiments is shown in Figure 4. The test piece has the dimensions of 35 mm (in large width B) or 20 mm (in small width *b*), 200 mm (in length $l_1$ and $l_2$ with the large and small widths) and 50 mm (in constant thickness *t*); the radii of curvature $\rho$ of the fillet weld in which stress is concentrated are: 0.08, 0.21, 0.39, 0.66, 1.42, 1.90 and 2.75 mm. For facilitating to measure the radius of curvature $\rho$, a model was made of the fillet weld by means of a model duplicator, cut into slices, and each slice was put in a light projector and magnified more than 20 times for measurement. The test piece was shaped by modeling the fillet weld zone of a Tee weld joint as in Figure 5a with the radius of curvature $\rho$ as shown in Figure 5b and machining the fillet weld zone. The material of the test pieces was SM50A (JIS G3106 "Rolled steel for welded structure"), and the accuracy of finishing was 240 μmRz at the portion of the radius of curvature $\rho$ and 120 μmRz at the other portions (JIS B0601 "Mean roughness at cross point in definition and display of surface roughness).

The experiments were conducted using the apparatus shown in Figure 6. First, the probe 3 placed on the surface of the test piece 6 was secured on the test-piece surface in such a manner that the ultrasonic wave emitted from the probe 3 was incident toward the stress-concentrated portion 2. The probe 3 was connected to an ultrasonic flaw detector 7 by pulse echo technique (will be referred to as "ultrasonic flaw detector" hereinafter) widely used as nondestructive flaw detector for metals. When the test piece 6 mounted in place on the Amsler universal testing machine (not shown) was applied with a tensile load F in the direction of arrow with the load changed a reflected acoustic pressure developed in the stress-concentrated portion 2 correspondingly to each of the tensile loads F was displayed on a CRT display 8 of the ultrasonic flaw detector 7. The acoustic pressure was read for measurement. The ultrasonic flaw detector 7 was SM-80, SM-90, etc. made by Tokyo Keiki Co., Ltd. and the probe 3 was an angle beam probe made by Japan Probe Co., Ltd. The probes 3 used in the experiments were in 5 kinds: 2Z10×10A70, 5Z10×10A70, 5Z10×10A60, 5Z10×10A45 and 7Z10×10A70. Since the change in acoustic pressure of the reflected wave, having taken place in the stress-concentrated portion 2 in response to the change of tensile load F was very small, the acoustic pressure of reflected wave was measured by the following method for facilitating the read and measurement:

(1) With the rejection control turned off, the echo at a lower level than a predetermined level on the CRT display 8 is not inhibited.

(2) A section paper was attached on the scale panel on the CRT display 8 and the portion equal to 10% of the scale panel was regularly divided by 20; namely, one division was made 0.5% of the scale panel.

(3) The reflected-wave acoustic pressure from the stress-concentrated portion 2 where the tensile load F was $\sigma_n$ was zero set at the center (equal to 50%) of the scale panel on the CRT display 8.

(4) As the test piece 6 was applied with various tensile loads F, the reflected-wave acoustic pressure from the stress-concentrated portion 2 was read by the unit of 0.5% division at each of the tensile load F.

(5) The value of the acoustic pressure read by the unit of 0.5%/division of the step (4) above was displayed as echo height having been converted into decible value, not acoustic pressure.

The reflected wave derived from the incident wave 4 emitted for incidence upon the stress-concentrated portion 2 is displayed on the CRT display 8 taking as horizontal axis the distance *x* from the incidence point of the incident wave 4 to the stress-concentrated portion 2 as shown in Figure 6 and as the vertical axis the height *h* of the echo 10 displayed in dB. The reference numeral 9 indicates an echo of the transmitted ultrasonic wave. This is illustrated in Figure 7.

The experiments were also conducted on the test pieces with the radii of curvature ρ of the fillet weld zone being in 7 kinds as having been described. Furthermore, the experiments were done with the different radii of curvature ρ and small width *b* in combination with said 5 types of probes. As the results, the basic principle of the inventive method of measuring the factor of stress concentration was proved as follows:

(1) The result of the experiment conducted on the relation between the change of tensile load F and the change of echo height *h* is shown in Figure 8. In Figure 8, the relation is shown as converted into a relation between the mean stress $\sigma_n$ and echo height *h*. The mean stress $\sigma_n$ is a value of a tensile load F divided by a section *a* area of the parallel region of a small width *b*. The test pieces used in this experiment are in seven kinds as explained before. The probe used was 5Z10×10A70 of which the frequency was 5 MHz. The experiment was conducted in the manner as having been described with reference to Figure 6 in the foregoing. As seen from Figure 8, when the mean stress $\sigma_n$ is on the order of 10 to 15 kg/cm$^2$, all the echo heights *h* displayed in db decrease almost linearly whether the radius of curvature ρ is large or small, so that the linear expression (10) is established:

$$h=-a\sigma_n \qquad (10)$$

where a: Constant of proportion indicative of gradient.

Within the stress region where the relation (10) is established, the stress-concentrated portion is within the limits of elasticity, and the maximum stress $\sigma_{max}$ does not exceed the yield point $\sigma_y$ of the test-piece material, therefore, it can be said that the ratio $\sigma_{max}/\sigma_n$ between the mean stress $\sigma_n$ and maximum stress $\sigma_{max}$ is precisely equal to the factor of stress concentration α. Meanwhile, in the stress region where the echo height *h* is nearly constant or increases, the maximum stress $\sigma_{max}$ in the stress-concentrated portion exceeds the yield point $\sigma_y$ of the test piece material and it is estimated that the stress-concentrated portion incurs plastical deformation.

Also as apparent from Figure 8, the echo height *h* has a larger gradient as the radius of curvature ρ is smaller. It is well known the the smaller the radius of cuvature, the larger the factor of stress concentration is. The Applicant of the present invention guessed and found that there is a certain relation between the gradient of echo height *h* and the factor of stress concentration. It was reported on the page 632 of the paper entitled "Stress Concentration" (published by Morikita Shuppan in 1973) that the solid solution of stress concentration factor was obtained for the test piece having the shape and dimension shown in Figure 4 in the following form as the results of experiments on the photo-elasticity:

$$\alpha=1+\left[\frac{B/b-1}{(2.8\cdot B/b-2)}\ \frac{b}{\rho}\right]^{0.65} \qquad (12)$$

For each radius of curvature ρ, a constant of proportion *a* in the expression (10) is determined by the method of least squares based on the experiment results shown in Figure 8. On the other hand, a factor of stress concentration α is determined through calculation of the expression (12) by placing the value of each radius of curvature ρ in the expression. The relation between the constant of proportion *a* and factor of stress concentration is plotted in a graph, which is shown in Figure 9. The small circles in Figure 9 indicate the plotted values. As seen from Figure 9, there is a linear relation between the logarithmic value of the factor of stress concentration α and the constant of proportion *a* indicative of the gradient $h/\sigma_n$. The regression formula expressing the relationship between the factor of stress concentration α and the constant of proportion *a*, determined by the method of least squares will be as follows:

$$a=-0.158\log\alpha \qquad (13)$$

It is seen that the above expression depicted with a straight line generally coincides with the plotting with small circles as shown in Figure 9. The error of the straight line from each plotted point is as small as less than 20% in case the factor of stress concentration α is less than 5. It is understood that the factor of stress concentration α could be determined with an accuracy sufficiently high in practice and quantitatively when obtaining the constant of proportion *a* indicative of the gradient $h/\sigma_n$.

(2) It is considered from the expression (12) that the factor of stress concentration α of the test piece used in the above-mentioned experiment may be influenced by the radius of curvature ρ as well as the test piece widths B and *b*. Experiment was effected in the procedure shown in Figure 6 as in Figure 8 (the probe of 5 MHz was used) on the test pieces of the same shape as in Figure 4 and radii of curvature ρ: 0.74, 0.76, 1.65 and 3.50 mm but with the small width *b* of 29 mm instead of 20 mm. The results of this experiment are shown in Figure 10. As shown in Figure 10, the relation between the mean stress $\sigma_n$ and echo height *h* is similar in numerical value and gradient to the results shown in Figure 8. The relation between the constant of proportion *a* indicative of the gradient in the region where the expression (10) is established (mean stress $\sigma_n$ being on the order of 10 to 15 kg/cm$^2$) and the factor of stress concentration α obtained from the expression (12), is indicated with small circles in Figure 11. The regression expression indicating the relationship between the factor of stress concentration α and the constant of proportion *a* was determined to be identical to the expression (13), and it is shown with a straight line in Figure 11.

The results of this analysis proved that the constant of proportion *a* is not influenced by the width B and *b* of the test piece but depends upon the radius of curvature ρ of the stress-concentrated portion.

(3) The results of an experiment conducted of the influence of the refraction angle of the probe on the relation between the mean stress $\sigma_n$ and echo height *h* is shown in Figure 12. The parameter is the refraction angle of the probe. The test piece used in the experiment has the same shape as in Figure 4 and is the same in other respects as in Figure 4 except for the radius of curvature ρ being 0.66 mm. Also, the probes used are of 4 MHz in frequency as in the above experiment and of three kinds of refraction angle: 45°, 60° and 70°. The factor of stress concentration α of this test piece is 3.43 as calculated based on the expression (12). It is recognized from the results of this experiment, the relation between the mean stress $\sigma_n$ and echo height *h* is so little influenced by any difference in refraction angle among the probes that it may be depicted with a straight line.

(4) Figures 13 and 14 show the results of the experiments conducted on how the change of the probe frequency *f* influenced on the relation between the mean stress $\sigma_n$ and echo height *h*. The test piece used in the experiment has the same shape as in Figure 4 and it is the same in other respects as in the above-mentioned experiment except for the radii of curvature ρ of the fillet weld being 0.08, 0.21, 0.39, 0.66 and 2.75 mm (5 kinds). The probes used in this experiment include a one of 2 MHz in frequency (2Z10×10A70) with the results in Figure 13 and another of 7 MHz in frequency (7Z10×10A70) with the results in Figure 14. So, the experiments were done in the same manner as having been described with reference to Figure 6 as in Figure 8 (the probe of 5 MHz was used). Both the experiment results in Figures 13 and 14 have a same tendency as that in Figure 8 which has been described in (1) above, and it was proved from these experiments that the higher the probe frequency *f*, the greater the gradient of the echo height *h*, namely the value of the constant of proportion *a* in the expression (10).

The constant of proportion *a* will be obtained from the relation between the mean stress $\sigma_n$ and echo height *h* determined with probe frequencies *f* of 2 MHz and 7 MHz by the method described in (1) as follows:

With 2 MHz:

$$a=-0.07 \log \alpha \quad (15)$$

With 7 MHz:

$$a=-0.185 \log \alpha \quad (16)$$

The relations between the gradients in the experimental expressions (13), (15) and (16) and each of the frequencies *f* are shown with small circles in Figure 15. The horizontal axis of the graph in Figure 15 is the logarithmic value of frequency *f* (MHz) while the vertical axis is the gradient A of the experimental expression. As seen from Figure 15, there is a linear relation between the gradient A and the logarithmic value of frequency *f*. The regression expression of this relation is as follows:

$$A=-0.213 \log f-0.007 \quad (17)$$

where f: Probe frequency (MHz)

The relation between the constant of proportion *a* and the factor of stress concentration α can be derived as follows from the expressions (13) and (17):

$$a=(-0.213 \log f-0.007) \log \alpha \quad (18)$$

The factor of stress concentration α can be expressed as follows based on the expression (18):

$$\alpha=10^{\frac{a}{(-0.213 \log f-0.007)}} \quad (19)$$

In effect, the Applicant of the present invention found the fact that the constant of proportion *a* in the expression (10) is a function of the radius of curvature ρ of the stress-concentrated portion, and base on this finding, the Applicant of the present invention established the method of determining a factor of stress concentration from a constant of proportion *a*. This principle is precisely indicated by the expressions (18) and (19). By placing the expression (19) in the expression (10), the following is obtained:

$$h=[(-0.213 \log f-0.007) \log \alpha]\sigma_n \quad (18')$$

By transforming this expression, the following relation can be obtained:

$$\alpha=h/10(-0.213 \log f-0.007)\sigma_n \quad (19')$$

Since the mean stress $\sigma_n$ and probe frequency *f* are known, it is possible to calculate the factor of stress concentration α when an echo height *h* is determined. However, the following should be taken in consideration. Namely, the expression (10) is based on the assumption that as shown in Figures 8 and 10, the echo height *h* is zero when the mean stress $\sigma_n$ is zero.

In most of the practically used structural members and mechanical parts, the stress cannot be suppressed to zero, and even if the external force can be successfully nulled, a residual stress exists in many cases.

The present invention utilizes the fact that the constant of proportion *a* and factor of stress concentration $\alpha$ are in a functional relation. Therefore, it is possible to calculate the constant of proportion *a* in the expression (10) by measuring the sound pressures of the reflected waves from the stress-concentrated portion with a plurality of different stresses in a loaded status and other loaded status with a higher or lower stress.

Therefore, with the present invention even in case it is difficult or impossible to measure the radius of curvature $\rho$ of the stress-concentrated portion, it is possible to determine, by calculating the expressions (19), the factor of stress concentration in the stress-concentrated portion of a to-be-measured member easily, quantitatively, highly accurately and nondestructively by determining a constant of proportion *a* indicative of the gradient $h/\sigma_n$. Also, the factor of stress concentration can be measured real-time by measuring the height of an echo from the stress-concentrated portion of the member of an actual product. As having been described in the foregoing, the factor of stress concentration can be determined directly, in a short time and with an accuracy equal to or higher than the value determined in the photo-elasticity experiments, by measuring the height of an echo from the stress-concentrated portion of a member under measurement. At the same time, the factor of stress concentration can be easily determined statically as well as dynamically by changing the working stress.

These and other objects and advantages of the present invention will be better understood from the ensuing description made, by way of example, of the preferred embodiments of the present invention with reference to the drawings.

Brief description of the drawings

Figure 1 explains the basic principle of the inventive method of measuring the factor of stress concentration;

Figure 2 is a detail view of the portion *a* of the stress-concentrated portion in Figure 1, showing the stressed state of $\sigma_{n1}$ in mean stress;

Figure 3 explains the change from the stressed state in Figure 2 to a stressed state of $\sigma_{n2}$ in mean stress;

Figure 4 explains the shape of the test piece used in the experiment effected to prove the basic principle of the inventive method of measuring the factor of stress concentration;

Figure 5a shows the fillet weld zone of a Tee joint, and Figure 5b shows the modeling of the fillet welded portion in Figure 5a by finishing the fillet weld zone so as to have a radius of curvature $\rho$;

Figure 6 explains the experimental device using the test piece in Figure 4;

Figure 7 explains as enlarged in scale the display on the CRT screen of the experimental device in Figure 6;

Figure 8 shows one example of the result of an experiment in which the relation between the mean stress and echo height was determined taking as parameter the radius of curvature of the stress-concentrated portion;

Figure 9 shows the correlation between the factor of stress concentration in Figure 8 and the constant of proportion indicative of the gradient of the relation between the mean stress and echo height;

Figure 10 shows one example of the result of an experiment in which the relation between the mean stress and echo height was determined with the test piece width and radius of curvature of the stress-concentrated portion changed;

Figure 11 shows the correlation between the factor of stress concentration in Figure 10 and the constant of proportion indicative of the gradient of the relation between the mean stress and echo height;

Figure 12 shows one example of the result of an experiment in which the relation between the mean stress and echo height was determined taking as parameter the angle of refraction of the ultrasound probe;

Figure 13 shows one example of the result of the experiment in Figure 8 having been done with the probe frequency changed;

Figure 14 shows the result of the experiment in Figure 13 having been done with the probe frequency changed;

Figure 15 shows the correlation between the gradient of the experimental expression by which the relation between the mean stress and echo height was determined with the probe frequency changed, and that probe frequency;

Figures 16a to 18 show a first example in which the present invention was applied to the measurement of the factor of stress concentration at the web side of fillet weld zone of a Tee joint. Figure 16a explaining the test piece and measuring apparatus, Figure 16b being a side elevation of the test piece in Figure 16a, Figure 16c showing as enlarged in scale the toe of weld W of the portion to be measured, Figure 17 showing the result of the measurement of the relation between the mean stress and echo height taking as parameter the radius of curvature of the toe of weld W, and Figure 18 being a graph indicative of the relation between the radius of curvature and factor of stress concentration, determined from the measurement result in Figure 17, in which the regression line of the above relation is indicated with a dot line;

Figures 19a to 21 show a second example in which the present invention was applied to the measurement of the factor of stress concentration at the flange side of fillet weld zone of a Tee joint, Figure 19a explaining the test piece and measuring apparatus, Figure 19b being a side elevation of the test piece in Figure 19a, Figure 19c showing as enlarged in scale the toe of weld E of the portion to be measured. Figure 20 showing the result of the measurement of the relation between the mean stress and echo height taking as parameter the radius of curvature of the toe of weld E, and Figure 21 being a graph indicative of the relation between the radius of curvature and factor of stress concentration, determined from the measurement result in Figure 20, in which regression line of the above relation is indicated with a dot line.

Figures 22a to 24 show a third example application of the present invention, Figure 22a showing the shape of an undercut developed in the toe of weld of a test piece, Figure 22b showing an example shape of the undercut as enlarged in scale, Figure 23 showing the result of measurement of the relation between the mean stress and echo height taking as parameter the ratio between the radius of curvature and depth of the undercut bottom, and Figure 24 being a graph indicative of the relation between the ratio between the radius of curvature and depth and the factor of stress concentration, determined from the measurement result in Figure 23, in which the relation calculated from the experimental expression in an experiment of photo-elasticity is indicated with a dot line;

Figures 25 and 26 explain a fourth example application of the present invention, Figure 25 showing the measurement result of the relation between the mean stress and echo height taking as parameter the ratio between the radius of curvature and depth of the bottom of an undercut developed in the toe of weld at the flange side, and Figure 26 being a graph indicative of the relation between the ratio between the radius of curvature and depth and the factor of stress concentration, determined from the measurement result in Figure 25, in which the relation calculated from the experimental expression in an experiment of photo-elasticity.

Detailed description of the preferred embodiments

The present invention will be further explained with reference to the drawings, taking as model the fillet weld zone of a Tee joint.

Figures 16 to 18 explain a first embodiment of the present invention, among which Figures 16a and 16b provide explanation of the test piece and an apparatus to measure the factor of stress concentration in the weld zone of the test piece. The test piece has the flange width B of 40 mm at the T joint and web width *b* of 8 mm, the flange thickness $l_1$ and web height $l_2$ both of 200 mm, and the length *t* of 50 mm. The weld zone is a weld bead of 8 mm leg length, which is formed by a semi-automatic $CO_2$ arc welding. Figure 16c shows as enlarged in scale a toe of weld W at the web side which is the stress-concentrated portion in Figure 16a. The toe of weld W has 5 kinds of radius of curvature $\rho_w$: 0.4, 1.7, 1.9, 4.2 and 6.2 mm. The radii of curvature $\rho_w$ were measured in the same manner as having been described concerning the test piece shown in Figure 4. The material of the test piece is SM50A, the same as that of the test piece shown in Figure 4. The toes of weld other than that W of the member under measurement were finished by a grinder so as to have a sufficiently large radius of curvature to prevent the toe of weld W from being influenced by any stress concentration. The measuring apparatus for factor of stress concentration is similar to that shown in Figure 6. The probe 3 placed on the web is secured by any adhesive for the ultrasound to be emitted for incidence toward the toe of weld W at the web where stress is concentrated, and then electrically connected to the ultrasound flaw detector 7. The test piece is mounted in place on the Amsler universal testing machine (not shown) and applied with a tensile load F in the direction of arrow with the load being changed in value. The types of the ultrasound flaw detectors 7 are SM-80 and SM-90 by Tokyo Keiki Co., Ltd. The type of the probe 3 is 2Z10×10A70 of which the frequency is 5 MHz and refraction angle is 70°.

When the test piece is applied with a variety of tensile loads F, a means stress $\sigma_{nw}$ develops against each of the tensile loads F in the web. In the stressed state in which mean stresses $\sigma_{nw}$ of different values develop, the reflected wave derived from the incident wave 4 emitted from the probe for incidence toward the toe of weld W at the web side has the beam path length displayed along the horizontal axis of CRT 8, while height *h* of the echo 10 indicative in dB of the acoustic pressure of the reflected wave from the toe of weld B is displayed along the vertical axis.

The measurement results of the relation of the echo height *h* with the change of the mean stress $\sigma_{nw}$ are shown in Figure 17. The parameter is the radius of curvature $\rho_w$ of the toe of weld W at the web side. It will be understood from Figure 17, that the smaller the radius of curvature $\rho_w$, the greater the change of echo height *h* with the change of mean stress $\sigma_{nw}$ and that the relation between both these factors is linear, where the mean stress $\sigma_{nw}$ is in the range of about 10 to 15 kg/mm$^2$. By substituting this relation in the expression (13), a factor of stress concentration α of the toe of weld W can be easily determined for each mean stress $\sigma_{nw}$. The relation between the radius of curvature $\rho_w$ and the factor of stress concentration α obtained from the expression (19) is shown with small circles in Figure 18. The regression line, formed by connecting the small circles, which indicates the relation between the factor of stress concentration α and radius of curvature $\rho_w$, is expressed as follows:

$$\alpha = 1 + \frac{1}{\sqrt{\rho_w}} \qquad (20)$$

Figures 19a to 21 explain a second embodiment of the inventive method of measuring the factor of stress concentration. According to the second embodiment, the factor of stress concentration of the toe of weld E at the flange side is measured, while the first embodiment is intended for measuring the factor of stress concentration of the toe of weld W at the web side.

Figures 19a and 19b explain the test piece and the apparatus for measurement of the factor of stress concentration in the weld, and Figure 19c shows as enlarged in scale and toe of weld E at the flange side in Figure 19a. The test piece is the same in shape, material and dimensions as in the first embodiment, except for the variety of radius of curvatures $\rho_E$ being in 4 kinds: 0.4, 1.34, 3.7 and 6.0 mm. Any toes of weld other than that E of the test piece are finished by a grinder so as to have a sufficiently large radius of curvature to prevent the toe of weld E from being affected by any stress concentration. Also, the measuring apparatus for factor of stress concentration and the method of measurement are identical to those in the first embodiment, provided that the probe 3 is placed at the flange side for the ultrasound wave 4 to be emitted from the probe for incidence toward the toe of weld E at the flange side.

The relation of the echo height *h* with the change of mean stress $\sigma_{nw}$ was measured and the result is shown in Figure 20. The parameter is the radius of curvature $\rho_E$ of the toe of weld E at the flange side. As seen from Figure 20, the smaller the radius of curvature $p_E$, the greater the change in echo height *h* as the mean stress $\sigma_{nw}$, changes, which are the same as in Figure 17 of the first embodiment; however, with the radii of curvature $\rho_E$ being 3.7 and 6.0 mm, the echo height *h* shows only a little change in the range of mean stress $\sigma_{nw}$ being a maximum of 15 kg/mm$^2$. This means that the factor of stress concentration $\alpha$ is small. The relation between the radius of curvature $\rho_w$ and the factor of stress concentration $\alpha$ determined from the expression (19) is shown with small circles in Figure 21. The regression line formed by connecting the spots plotted with the small circles to each other and indicative of the relation between the factor of stress concentration $\alpha$ and radius of curvature $\rho_E$ can be expressed as follows:

$$\alpha=1+\frac{1}{2\sqrt{\rho_E}} \qquad (21)$$

With the radius of curvature $\rho_E$ increased up to some 7.0 mm, the factor of stress concentration $\alpha$ becomes less than 1.2. On the contrary, with a small radius of curvature $\rho_E$ being as small as 0.4 mm, the factor of stress concentration $\alpha$ becomes 1.79. This value is small as compared with the values of 1.38 and 2.58 as shown in Figure 18 of the first embodiment. It means that even with a slight difference in measuring position between the toe of weld W at the web side and that E at the flange side while the measurement is being done under same conditions, a difference in value of the factor of stress concentration can be definitely measured, which proves one aspect of the present invention that the measurement of the factor of stress concentration can be done with a highı accuracy.

A third embodiment of the inventive method of the factor of stress concentration will be explained below with reference to Figures 22a to 24. According to this third embodiment, an undercut $W_u$ is developed in the toe of weld, in place of the toe of weld W at the web side in the first embodiment, during a normal welding, and the factor of stress concentration at the bottom of the undercut $W_u$ is measured.

The test piece, measuring apparatus for the factor of stress concentration and method of measuring according to this third embodiment are identical to those in the first embodiment, except that the toe of weld W in Figure 16a, having been described concerning the first embodiment, is replaced with the undercut shown in Figure 22a. The radius of curvature $\rho_{wu}$ of the undercut bottom and the shape of the undercut of a bottom *d* from the plate surface to the bottom are shown by way of example in Figure 22b. This Figure 22b shows as enlarged in scale by 50 times the example radius of curvature $\rho_{wu}$ of 0.07 mm and depth *d* of 0.63 mm. The reference symbol D denotes a weld beam surface of which the toe of weld other than the undercut is finished sufficiently to prevent the toe of weld $W_u$ from being affected by any stress concentration. $\rho_{wu}$/d in this embodiment is 0.11. The radius of curvature $\rho_{wu}$ and the depth *d* were measured by modeling the undercut by a replica, cutting the model into slices, and magnifying the slice by a light projector for measurement. Figure 22a is a schematic drawing of Figure 22b. While in the first and second embodiments, several kinds of radius of curvature of the toe of weld were measured, the ratio between the radius of curvature $\rho_{wu}$ and depth of *d* of the undercut bottom, namely, $\rho_{wu}$/d, is measured and the factors of stress concentration are measured of test pieces of three kinds of that ratio, 0.11, 0.14 and 0.67.

The results of measurement of the relation of the echo height *h* with the change of mean stress $\rho_{nw}$ are shown in Figure 23. The parameter is $\rho_{wu}$/d. As apparent from Figure 23, the smaller the value of the ratio $\rho_{wu}$/d, namely, the smaller and sharper the radius of curvature $\rho_{wu}$ of the undercut bottom and the larger the depth *d*, the steeper the gradient of the echo height *h*. By substituting this relation in the expression (19), the factor of stress concentration $\alpha$ at the undercut $W_u$ developed in the toe of weld at the web side can be easily determined.

Figure 24 shows the relation between the factor of stress concentration $\alpha$ determined by the expression (19) and the ratios $\rho_{wu}$/d of said three kinds of test piece. The points of the factors of stress concentration are indicated with small circles in this Figure 24. Concerning a test piece with a U-shaped notch, the factor of stress concentration when a tensile load works in the direction in which the opening of the notch is opened had been measured in the past in a variety of photoelasticity experiments, and experimental expressions obtained by the experiments had been proposed. For example, H. Neuber reported a following expression in 1958:

$$\alpha=3\sqrt{d/2\rho}-1+\frac{4}{2+\sqrt{d/2\rho}} \quad (22)$$

E. Inglis reported an expression as follows in 1913:

$$\alpha=1+2\sqrt{d/\rho} \quad (23)$$

Also E. Armbruster reported the following expression in 1931:

$$\alpha=\frac{2d/\rho+4\sqrt{d/\rho}+2}{2+\sqrt{d/\rho}} \quad (24)$$

Plotting with a dot line in Figure 24 of the relation between the factor of stress concentration $\alpha$ determined by the expression (22) among those (22) to (24) and the ratio $\rho/d$ is relatively well coincident with the small circles indicative of the relation between the factor of stress concentration $\alpha$ determined by the expression (19) and the ratio $\rho_{wu}/d$ of the three kinds of test piece, especially at the side where the value of the factor of stress concentration $\alpha$ is large. It is recognized that the factor of stress concentration at the bottom of any undercut developed during a welding which is obtained from the measured value of $\rho_{wu}/d$ is substantially equal to that obtained from the method of the present invention and it can be determined as hardly influenced by the bead shape, leg length, thickness, etc. of the weld zone. With such a high accuracy that the inventive method can be satisfactorily used in practice.

A fourth embodiment of the inventive method will be explained with reference to Figures 25 and 26. While the third embodiment is intended for measurement of the factor of stress concentration at the bottom of an undercut $W_u$ developed in the toe of weld at the web side, the fourth embodiment is to measure the factor of stress concentration at the bottom of an undercut $E_u$ developed in the toe of weld at the flange side.

The test piece, measuring apparatus for the factor of stress concentration, method of measuring, etc. in the fourth embodiment are identical to those in the second embodiment, except that the tow of weld E in Figure 19a, having been described concerning the second embodiment, is replaced with the undercut shown in Figure 22a. In this embodiment, the relations between the radius of curvature $\rho_{Eu}$ of the undercut bottom and the depth *d* from the plate surface to the undercut bottom, namely, $\rho_{Eu}/d$, are in three kinds: 0.04, 0.32 and 0.80. The radius of curvature $\rho_{Eu}$ and the bottom *d* of the test piece were measured in the same manner as in the third embodiment.

The results of the measurement of the relation between the echo height *h* with the change of mean stress $\sigma_{nw}$ are shown in Figure 25. The parameter is $\rho_{Eu}/d$. The decrease of the echo height *h* as the mean stress $\sigma_{nw}$ increases, it is apparent from Figure 25, is very dull as compared with that in Figure 23 of the third embodiment, and also as compared with the factor of stress concentration of an undercut developed in the toe of weld at the web side, that of the undercut in this fourth embodiment is very small. By substituting this relation in the expression (19), the factor of stress concentration $\alpha$ at the bottom of the undercut $E_u$ with respect to the mean stress $\sigma_{nw}$ can be easily determined.

Figure 26 shows the relation between the factor of stress concentration $\alpha$ determined by the expression (19) and the ratios $\rho_{Eu}/d$ of the three kinds of test piece, with the relations being plotted with small circles. As having been described in the description concerning the third embodiment, many photo-elasticity experiments fof determining the factor of stress concentration had been done on test pieces with U-shaped notch; as the results, the expressions (22) to (24) had been reported. It is proved that plotting with dot line in Figure 26 of the relation between the factor of stress concentration $\alpha$ determined by dividing by 1.5 the square root of the expression (22) reported by H. Neuber, namely, by the expression (25) and the ratio $\rho/d$ is nearly coincident with the small circles determined by the expression (19):

$$\alpha=\frac{\sqrt{3\sqrt{d/2\rho}-1+\frac{4}{2+\sqrt{d/2\rho}}}}{1.5} \quad (25)$$

The method having been described in the foregoing is a visual method by which an echo is displayed on the CRT for measurement, but according to the present invention, the analogue quantity of echo height can be digitized by a well-known converting means and the correlation between the analogue quantity of the echo height and the working stress be calculated, for thereby indicating the results as numerical values. Also, such values can be stored in a memory and compared with reference values as necessary for diagnosis of the fatigue of the members of a product or machine or for preventive inspection of the latter.

It is evident to those skilled in the art that the present invention is not limited to the embodiments having been described in the foregoing, but can be varied in various forms without departing from the scope of technical concept of the present invention as claimed.

## Claims

1. A method of measuring a factor of stress concentration by utilizing ultrasound by determining, as an evaluation factor, the factor of stress concentration in a member by applying a load to the member having a stress concentrated portion, transmitting an ultrasonic wave into the member from an ultrasound transmission/reception probe, receiving reflected waves resulted from the incident ultrasonic wave having passed through the member and reached the surface of the member, and measuring the sound pressure of the reflected wave,

comprising the following steps of:

trànsmitting an ultrasonic wave into said stress-concentrated portion of said member in a first stressed state;

measuring, by said ultrasound transmission/reception probe, the sound pressure of the ultrasonic wave reflected from the said stress-concentrated portion while said member is in said first stressed state;

increasing or decreasing the stress at said stress-concentrated portion by increasing or decreasing said load to be a plurality of increased or decreased stressed states;

transmitting an ultrasonic wave into said stress-concentrated portion of said member with said plurality of increased or decreased stressed states;

receiving reflected waves from said stress-concentrated portion with said increased or decreased stressed states by said ultrasound transmission/reception probe, and measuring the sound pressures of the reflected waves;

comparing the sound pressure of the ultasonic wave reflected from the stress-concentrated portion in said first stressed state with the sound pressures of the ultrasonic waves reflected from the stress-concentrated portion when said stress-concentrated portion is in the increased or decreased stress states;

obtaining a rate of change in the compared values of the sound pressure in relation to the change in the stress working of the stress-concentrated portion;

repeating the previous steps as to be a plurality of test pieces each provided with a stress-concentrated portion having a known shape, a known size and a known factor of stress concentration, to obtain standard rate of change in the compared values of the sound pressure of the ultrasonic wave, taking as parameters the known shape, known size and given frequency of the ultrasonic wave; and

determining the factor of stress concentration at the stress-concentrated portion in said member, using as an evaluation index the value of the correlation between the standard rate of change in the comparison values and the known factor of stress concentration in the test piece.

2. The method according to claim 1, in which said rate of change is determined in such a range that as the load applied to said member increases, the sound pressure of the reflected wave from said stress-concentrated portion decreases.

3. The method according to claim 1, in which said ultrasound transmission/reception probe is fixed onto the surface of said member, loads of different magnitudes are consecutively applied to said member, and each time another load is applied, an ultrasonic wave is transmitted from said ultrasound transmission/reception probe into said member and the reflected wave from said stress-concentrated portion in said member is received.

4. The method according to claim 1, in which the relation between plural mean stresses in said member which are obtained correspondingly to said different loads and the measured sound pressures of said plural reflected waves is graphically indicated, said rate of change in sound pressure of said plural reflected waves in relation to the change of said mean stress is obtained from a gradient of a straight line appearing on said graph, and said rate of change is used as the evaluation index to determine the factor of stress concentration.

5. The method according to claim 1, for measuring a factor of stress concentration at a stress-concentrated portion of a mechanical member having an undercut or structural notched portion located at a portion where the cross-section of the member varies abruptly, said undercut or structural notched portion extending into the member and having a bottom, characterized in that:

the sound pressure of the ultrasonic wave reflected from the bottom of the stress-concentrated portion while said member is in said first stressed state is measured;

the stress on said member is increased or decreased in a direction causing a variation of the shape of the bottom of the stress-concentrated portion and the sound pressure of the ultrasonic wave reflected from the bottom of the stress-concentrated portion is measured while said stress-concentrated portion is in the increased or decreased stressed state; and

the sound pressure of the ultrasonic wave reflected from the bottom of the stress-concentrated portion in said first stressed state is compared with the sound pressure of the ultrasonic wave reflected from the bottom of the stress-concentrated portion when said stress-concentrated portion is in the increased or decreased stressed state to obtaining said rate of change.

**Patentansprüche**

1. Verfahren zum Messen eines Spannungskonzentrationsfaktors unter Verwendung von Ultraschall, indem als ein Bewertungsfaktor der Faktor der Spannungskonzentration in einem Bauteil durch Ausüben einer Belastung auf das Bauteil, das einen spannungskonzentrierten Teil hat, bestimmt wird, eine Ultraschallwelle von einem Ultraschall-Sende-/Empfangsprüfkopf aus in das Bauteil gesendet wird, reflektierte Wellen empfangen werden, die aus der einfallenden Ultraschallwelle resultieren, welche durch das Bauteil hindurchgeleitet worden ist, und die Oberfläche des Bauteils erreicht haben, und der Schalldruck der reflektierten Welle gemessen wird,

beinhaltend folgende Schritte:

Senden einer Ultraschallwelle in den spannungskonzentrierten Teil des Bauteils in einem ersten beanspruchten zustand;

Messen, mittels des Ultraschall-Sende-/Empfangsprüfkopfes, des Schalldruckes der Ultraschallwelle, die an dem spannungskonzentrierten Teil reflektiert worden ist, während das Bauteil in dem ersten beanspruchten Zustand ist;

Erhöhen oder Verringern der Spannung in dem spannungskonzentrierten Teil durch Erhöhen oder Verringern der Belastung, in mehrere erhohte oder verringerte beanspruchte Zustände zu bilden;

Senden einer Ultraschallwelle in den spannungskonzentrierten Teil des Bauteils mit den mehreren erhohten oder verringerten beanspruchten Zuständen;

Empfangen von reflektierten Wellen aus dem spannungskonzentrierten Teil mit den erhohten oder verringerten beanspruchten Zuständen durch den Ultraschall-Sende-/Empfangsprüfkopf und Messen der Schalldrücke der reflektierten Wellen;

Vergleichen des Schalldruckes der Ultraschallwelle, die an dem spannungskonzentrierten Teil in dem ersten beanspruchten Zustand reflektiert worden ist, mit den Schalldrücken der Ultraschallwellen, die an dem spannungskonzentrierten Teil reflektiert worden sind, wenn der spannungskonzentrierte Teil in den erhöhten oder verringerten Spannungszuständen ist;

Erzielen einer Änderungsgeschwindigkeit in den verglichenen Werten des Schalldruckes in Beziehung zu der Änderung in der Spannungseinwirkung auf den spannungskonzentrierten Teil;

Wiederholen der vorhergehenden Schritte an einer Viezahl von Teststücken, die jeweils mit einem spannungskonzentrierten Teil versehen sind, der eine bekannte Form, eine bekannte Größe und einen bekannten Spannungskonzentrationsfaktor hat, um eine Standardänderungsgeschwindigkeit in den verglichenen Werten des Schalldruckes der Ultraschallwelle zu gewinnen, wobei die bekannte Form, die bekannte Größe und die gegebene Frequenz der Ultraschallwelle als Parameter genommen werden; und

Bestimmen des Faktors der Spannungskonzentration in dem spannungskonzentrierten Teil des Bauteils, wobei als Bewertungsindex der Wert der Korrelation zwischen der Standardänderungsgeschwindigkeit in den Vergleichswerten und dem bekannten Faktor der Spannungskonzentration in dem Teststück benutzt wird.

2. Verfahren nach Anspruch 1, bei welchem die Änderungsgeschwindigkeit in einem derartigen Bereich bestimmt wird, daß, wenn die Belastung, die auf das Bauteil ausgeübt wird, zunimmt, der Schalldruck der reflektierten Welle aus dem spannungskonzentrierten Teil abnimmt.

3. Verfahren nach Anspruch 1, bei welchem der Ultraschall-Sende-/Empfangsprüfkopf auf der Oberfläche des Teils befestigt wird, Belastungen unterschiedlicher Größen nacheinander auf das Bauteil ausgeübt werden und jedesmal dann, wenn eine andere Belastung ausgeübt wird, eine Ultraschallwelle von dem Ultraschall-Sende-/Empfängsprüfkopf aus in das Bauteil gesendet und die reflektierte Welle aus dem spannungskonzentrierten Teil in dem Bauteil empfangen wird.

4. Verfahren nach Anspruch 1, bei welchem die Relation zwischen mehreren mittleren Spannungen in dem Bauteil, welche entsprechend den verschiedenen Belastungen und den gemessenen Schalldrücken der mehreren reflektierten Wellen erzielt werden, graphisch angezeigt wird, wobei die Änderungsgeschwindigkeit im Schalldruck der mehreren reflektierten Wellen in Relation zu der Änderung der mitteleren Spannung aus einem Gradienten einer geraden Linie erzielt wird, die in der graphischen Anzeige erscheint, und die Änderungsgeschwindigkeit als der Bewertungsindex benutzt wird, um den Spannungskonzentrationsfaktor zu bestimmen.

5. Verfahren nach Anspruch 1 zum Messen eines Faktors der Spannungskonzentration in einem spannungskonzentrierten Teil eines mechanischen Bauteils, das einen Unterschnitt oder einen strukturell eingekerbten Teil hat, welcher sich in einem Teil befindet, wo der Querschnitt des Bauteils sich abrupt verändert, wobei der Unterschnitt oder der strukturell eingekerbte Teil sich in das Bauteil erstreckt und einen Boden hat, dadurch gekennzeichnet, daß:

der Schalldruck der Ultraschallwelle, die an dem Boden des spannungskonzentrierten Teils reflektiert wird, während das Bauteil in dem ersten beanspruchten Zustand ist, gemessen wird;

die Spannung an dem Bauteil in einer Richtung erhöht oder verringert wird, die eine Veränderung der Form des Bodens des spannungskonzentrierten Teils verursacht, und der Schalldruck der Ultraschallwelle, die an dem Boden des spannungskonzentrierten Teils reflektiert wird, gemessen wird, während der spannungskonzentrierte Teil in dem erhöhten oder verringerten beanspruchten Zustand ist; und

der Schalldruck der Ultraschallwelle, die an dem Boden das spannungskonzentrierten Teils in dem ersten beanspruchten Zustand reflektiert wird, mit dem Schalldruck der Ultraschallwelle verglichen wird, die an dem Boden des spannungskonzentrierten Teils reflektiert wird, wenn der spannungskonzentrierte Teil in dem erhöhten oder verringerten beanspruchten Zustand ist, um die Änderungsgeschwindigkeit zu gewinnen.

**Revendications**

1. Un procédé pour mesurer un facteur de concentration de contraintes en utilisant les ultrasons en déterminant, comme facteur d'évaluation, le facteur de concentration de contraintes dans un organe en appliquant une charge à l'organe qui comprend une partie à concentration de contraintes, en transmettant une code ultrasonique dans l'organe depuis une sonde ultrasonique de transmission/réception, en recevant des ondes réfléchies provoquées par l'onde ultrasonique incidente qui a traversé l'organe et atteint la surface de l'organe, et en mesurant la pression sonique de l'onde réfléchie, comprenant les étapes de:

transmettre une onde ultrasonique dans ladite partie à concentration de contraintes dudit organe dans un premier état contraint;

mesurer, à l'aide de ladite sonde ultrasonique de transmission/réception la pression sonique de l'onde ultrasonique réfléchie depuis ladite partie à concentration de contraintes pendant que ledit organe est dans ledit premier état contraint;

augmenter ou diminuer la contrainte dans ladite partie à concentration de contraintes en augmentant ou en diminuant ladite charge pour créer de multiples états contraints à contrainte augmentée ou diminuée;

transmettre une onde ultrasonique vers ladite partie à concentration de contraintes dudit organe pour lesdits multiples états contraints à contrainte augmentée ou diminuée;

recevoir, par ladite sonde ultrasonique de transmission/réception, des ondes réfléchies depuis ladite partie à concentration de contraintes, selon lesdits états contraints de façon augmentée ou diminuée, et mesurer les pressions soniques des ondes réfléchies;

comparer la pression sonique de l'onde ultrasonique réfléchie depuis la partie à concentration de contraintes dans ledit premier état contraint avec les pressions soniques des ondes ultrasoniques réfléchies depuis ladite partie à concentration de contraintes lorsque ladite partie à concentration de contraintes se trouve dans les états à contrainte augmentée ou diminuée;

obtenir un taux de variation des valeurs comparées de la pression sonique par rapport à la variation de la contrainte agissant sur la partie à concentration de contraintes;

répéter les précédentes étapes pour de multiples pièces d'essai comportant chacune une partie à concentration de contraintes de forme connue, de dimension connue, et de facteur de concentration de contraintes connu, pour obtenir un taux standard de variation pour les valeurs comparées de la pression sonique de l'onde ultrasonique, en prenant comme paramètres la forme connue, la dimension connue et la fréquence donnée de l'onde ultrasonique; et

déterminer le facteur de concentration de contraintes à la partie à concentration de contraintes dans ledit organe, en utilisant comme indice d'évaluation la valeur de la corrélation entre le taux standard de variation des valeurs de comparaison et le facteur connu de concentration de contraintes dans l'éprouvette.

2. Le procédé selon la revendication 1, dans lequel ledit taux de variation est déterminé dans une plage telle que, lorsque la charge appliquée audit organe augmente, la pression sonique de l'onde réfléchie depuis ladite partie à concentration de contraintes diminue.

3. Le procédé selon la revendication 1, dans lequel ladite sonde ultrasonique de transmission/réception est fixée sur la surface dudit organe, des charges d'amplitudes différentes sont appliquées successivement audit organe et, chaque fois qu'une autre charge est appliquée, une onde ultrasonique est transmise depuis ladite sonde ultrasonique de transmission/réception dans ledit organe et l'onde réfléchie depuis ladite partie à concentration de contraintes dans ledit organe est reçue.

4. Le procédé selon la revendication 1, dans lequel la relation entre de multiples contraintes moyennes dans ledit organe, qui sont obtenues en correspondance avec lesdites différentes charges et les pressions soniques mesurées desdites multiples ondes réfléchies est indiquée graphiquement, ledit taux de variation dans la pression sonique desdites multiples ondes réfléchies en relation avec la variation de ladite contrainte moyenne est obtenu à partir d'un gradient d'une ligne droite apparaissant sur ledit graphe, et ledit taux de variation est utilisé comme index d'évaluation pour déterminer le facteur de concentration de contraintes.

5. Le procédé selon la revendication 1, pour mesurer un facteur de concentration de contraintes dans une partie à concentration de contraintes d'un organe mécanique qui possède une contre-dépouille ou une partie structurale encochée située dans une partie où la section transversale de l'organe varie de façon abrupte, ladite contre-dépouille ou ladite partie structurale encochée s'étendant dans l'organe et possédant un fond, caractérisé en ce que:

la pression sonique de l'onde ultrasonique réfléchie depuis le fond de la partie à concentration de contraintes est mesurée pendant que ledit organe est dans ledit premier état contraint;

la contrainte sur ledit organe est augmentée ou diminuée dans un sens en provoquant une variation de la forme du fond de la partie à concentration de contraintes et la pression sonique de l'onde ultrasonique réfléchie depuis le fond de la partie à concentration de contraintes est mesurée pendant que ladite partie à concentration de contraintes se trouve dans l'état à contrainte augmentée ou diminuée; et

la pression sonique de l'onde ultrasonique réfléchie depuis le fond de la partie à concentration de contraintes dans ledit premier état contraint est comparée à la pression sonique de l'onde ultrasonique réfléchie depuis le fond de la partie à concentration de contraintes lorsque ladite partie à concentration de contraintes se trouve dans l'état à contrainte augmentée ou diminuée pour obtenir ledit taux de variation.

FIG. 1

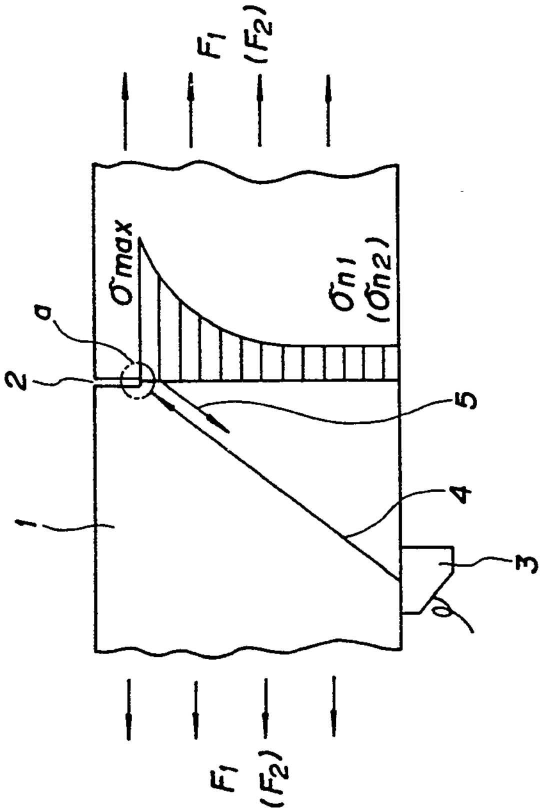


FIG. 2

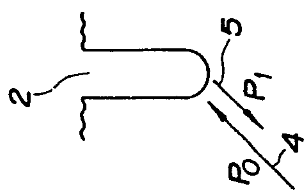


With mean stress of $\sigma_{n1}$

FIG. 3

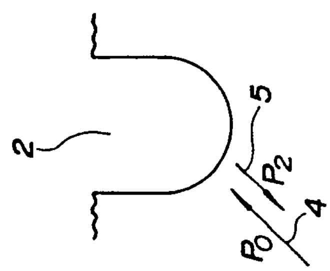


With mean stress of $\sigma_{n2}$

FIG. 4a

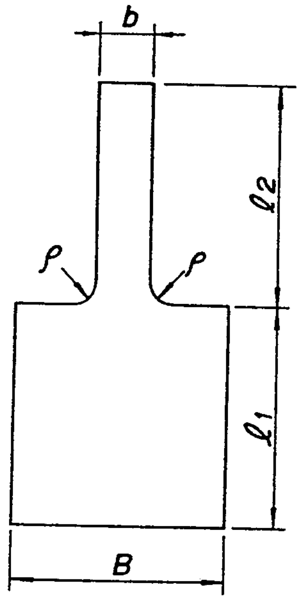


FIG. 4b

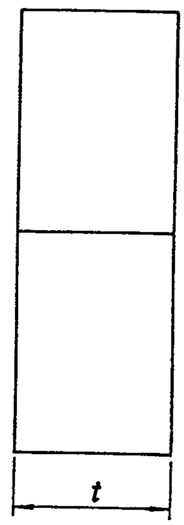


FIG. 5a

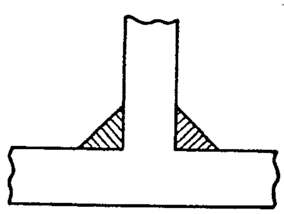

FIG. 5b

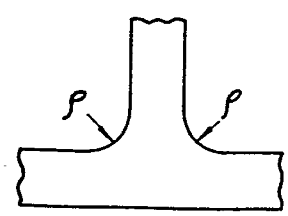

FIG. 6

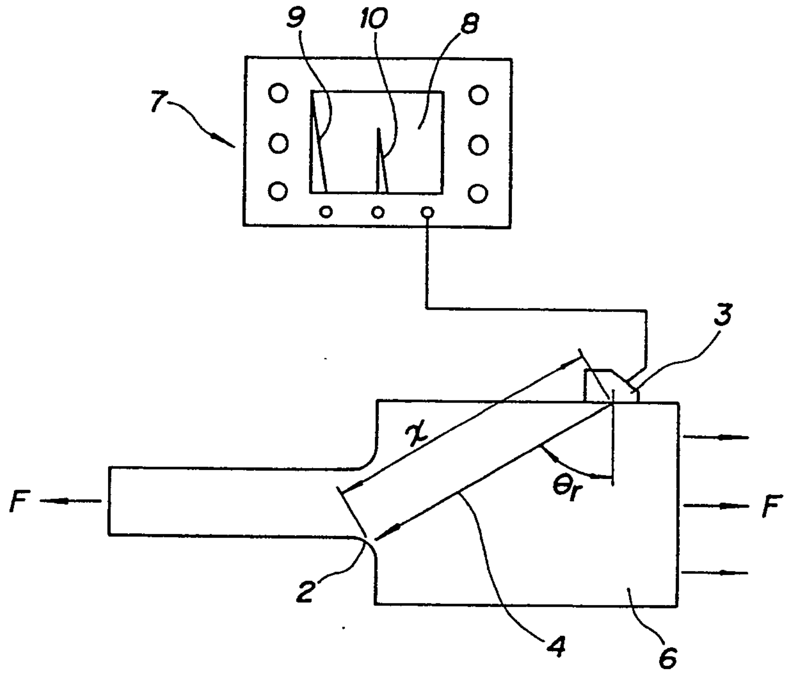


FIG. 7

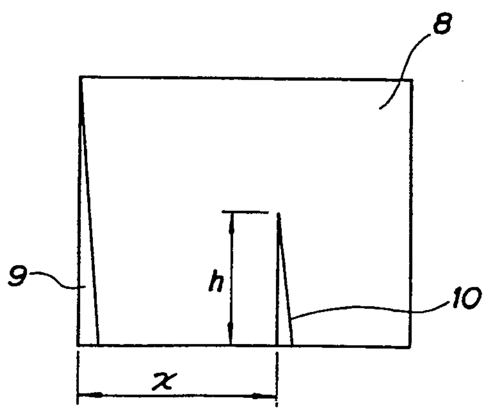

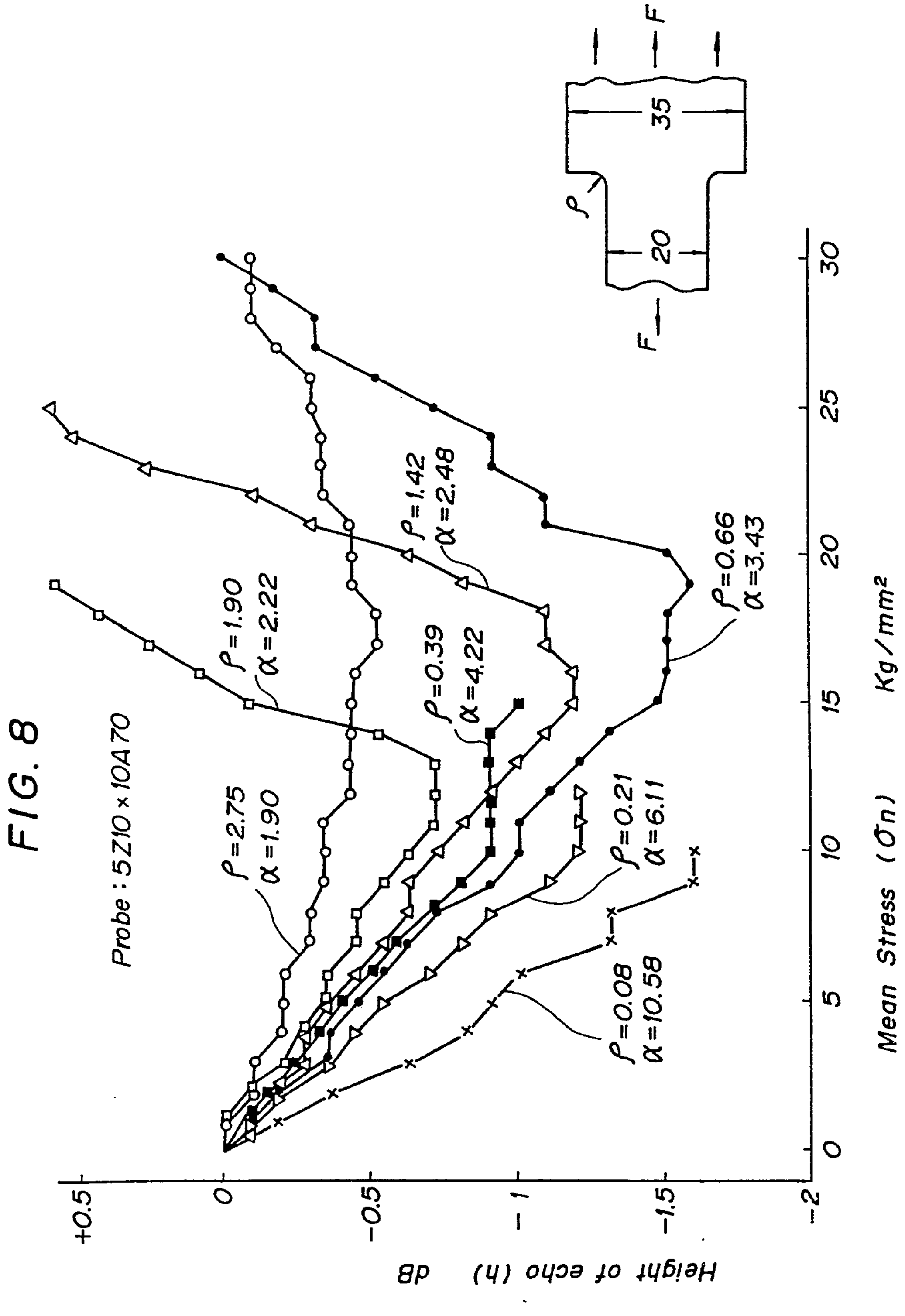
FIG. 8
Probe : 5Z10 × 10A70
ρ=2.75
α=1.90
ρ=1.90
α=2.22
ρ=0.39
α=4.22
ρ=1.42
α=2.48
ρ=0.66
α=3.43
ρ=0.21
α=6.11
ρ=0.08
α=10.58
Mean Stress (σn) Kg/mm²
Height of echo (h) dB
+0.5
0
−0.5
−1
−1.5
−2
0
5
10
15
20
25
30
F
ρ
20
35

FIG. 9

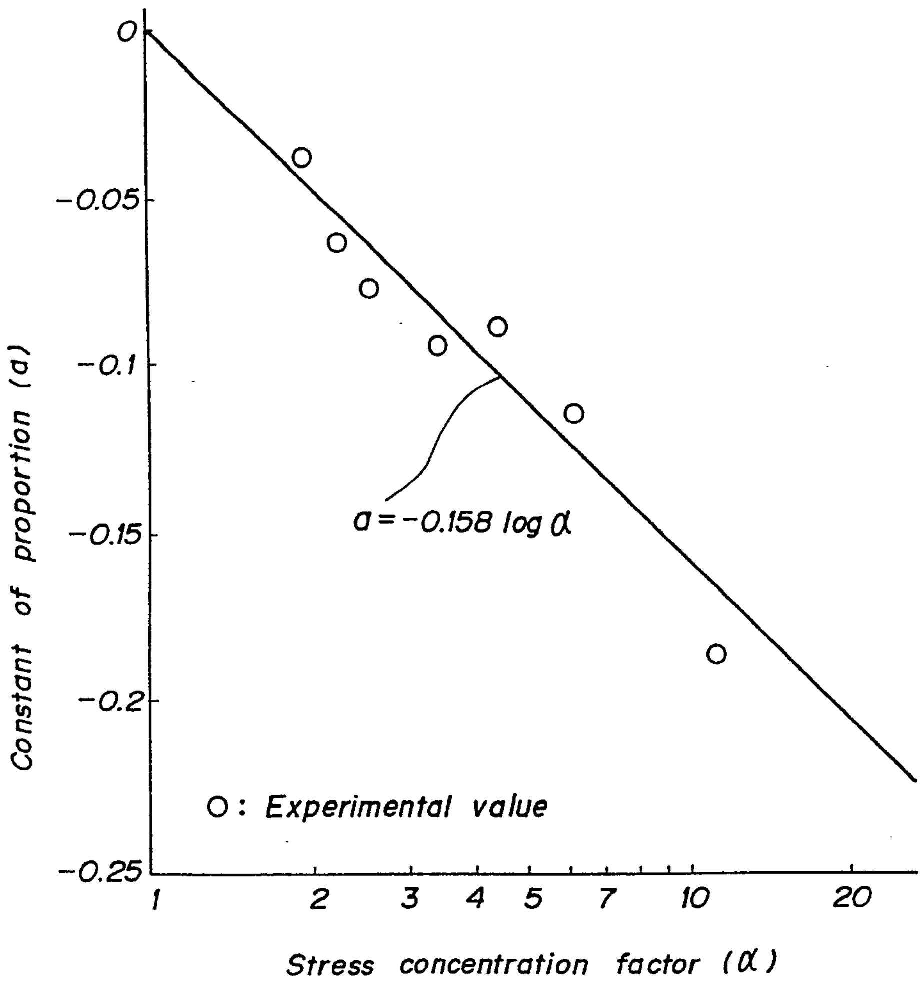
0
-0.05
-0.1
-0.15
-0.2
-0.25
Constant of proportion (a)
a = -0.158 log α
○ : Experimental value
1
2
3
4
5
7
10
20
Stress concentration factor (α)

FIG. 10

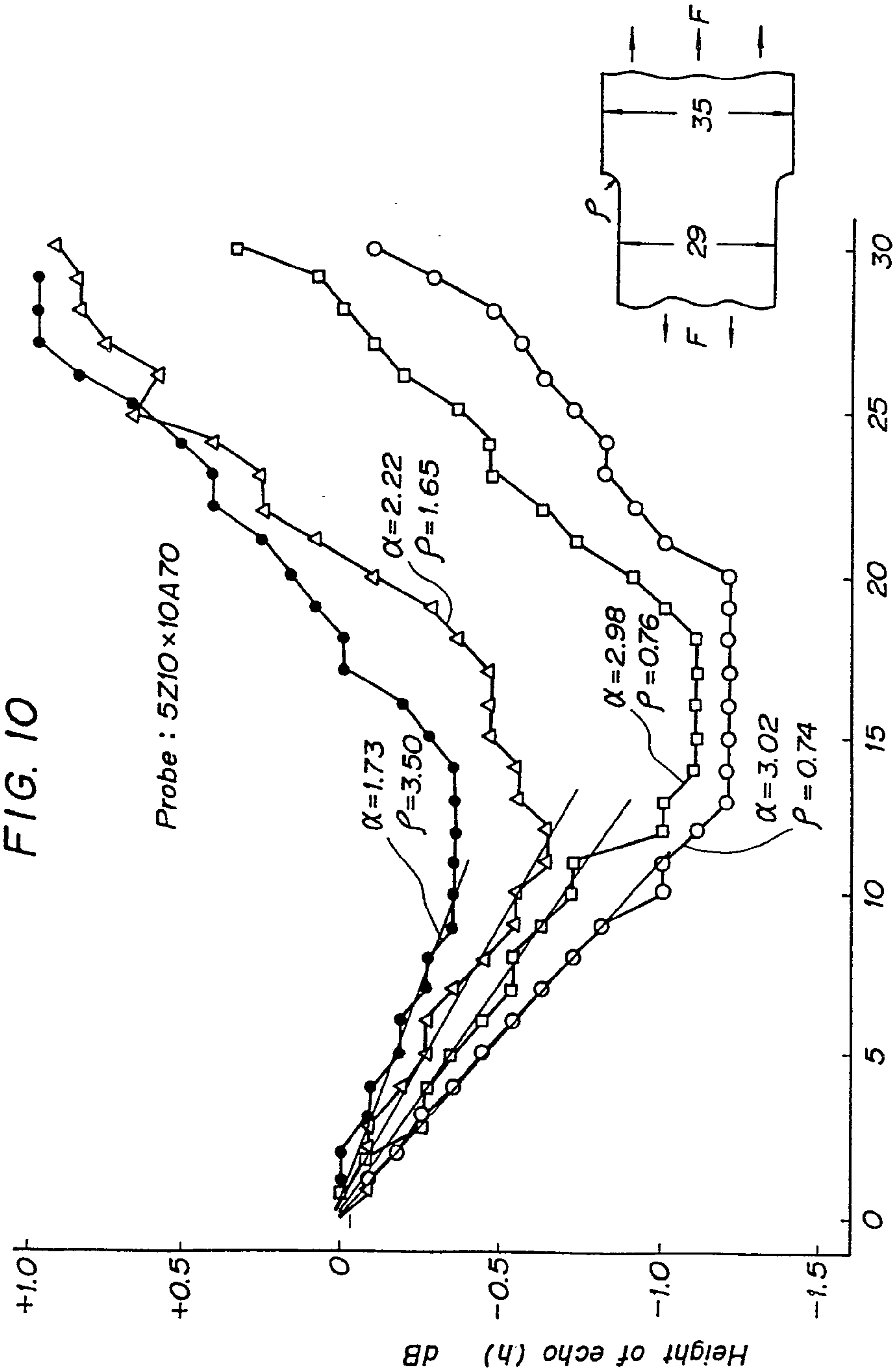
Probe : 5Z10×10A70
α=1.73
ρ=3.50
α=2.22
ρ=1.65
α=2.98
ρ=0.76
α=3.02
ρ=0.74
+1.0
+0.5
0
-0.5
-1.0
-1.5
Height of echo (h) dB
0
5
10
15
20
25
30
ρ
29
35
F
F

FIG. 11

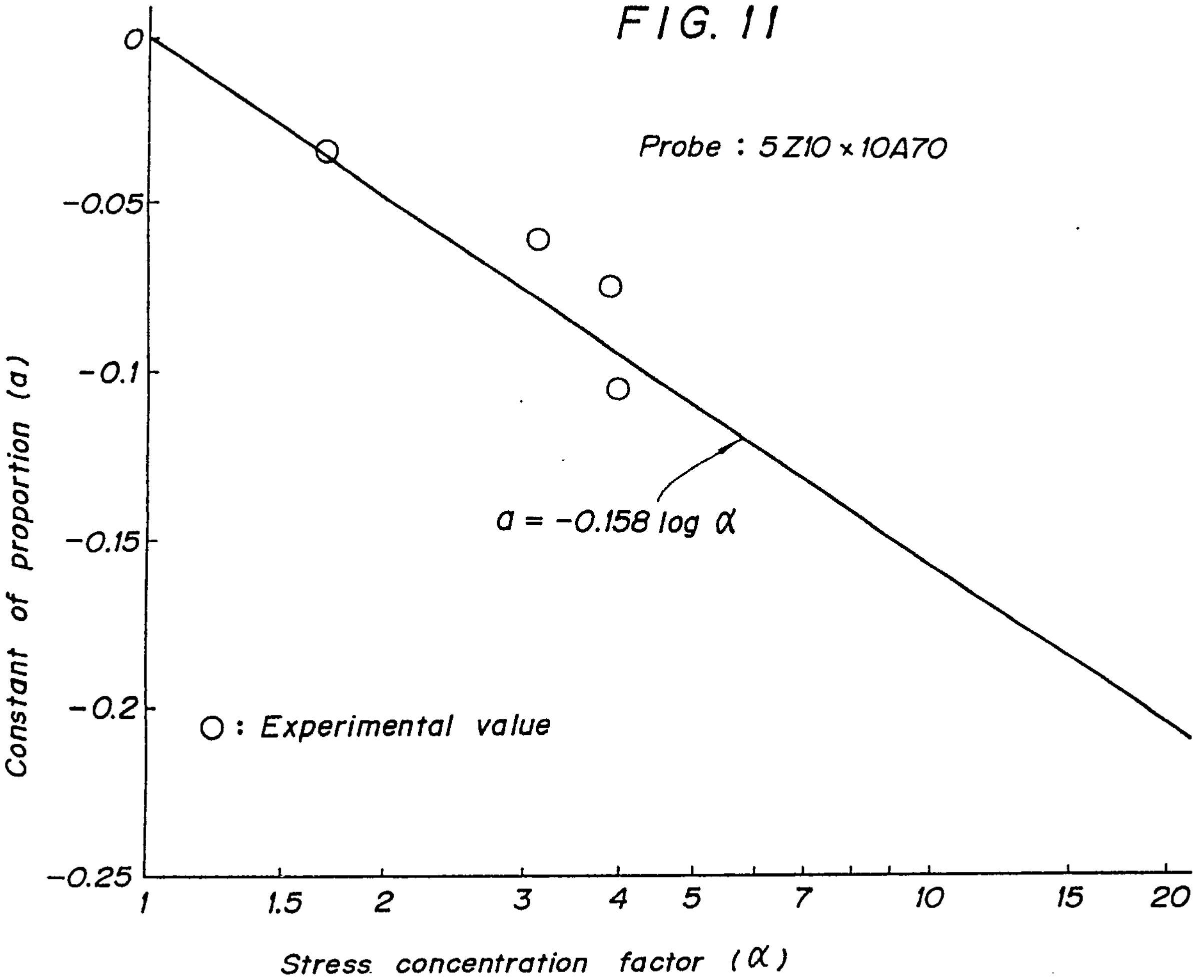
Probe : 5Z10 × 10A70
a = −0.158 log α
○ : Experimental value
Constant of proportion (a)
0
−0.05
−0.1
−0.15
−0.2
−0.25
1
1.5
2
3
4
5
7
10
15
20
Stress concentration factor (α)

FIG. 12

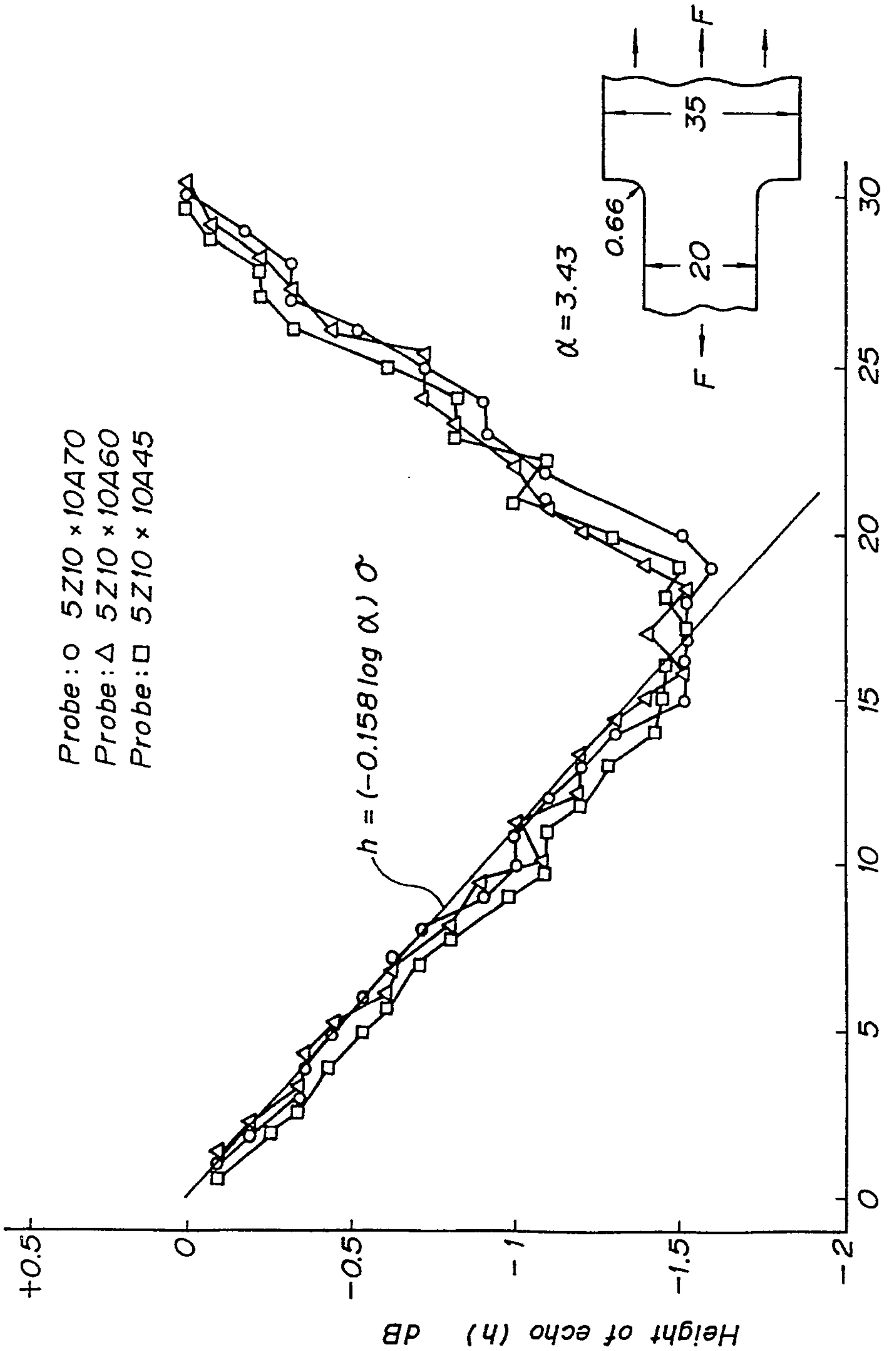
Probe : ○ 5Z10 × 10A70
Probe : △ 5Z10 × 10A60
Probe : □ 5Z10 × 10A45
h = (−0.158 log α) σ
α = 3.43
0.66
20
35
F
Mean Stress (σn) Kg/mm²
Height of echo (h) dB
+0.5
0
−0.5
−1
−1.5
−2
0
5
10
15
20
25
30

FIG. 13

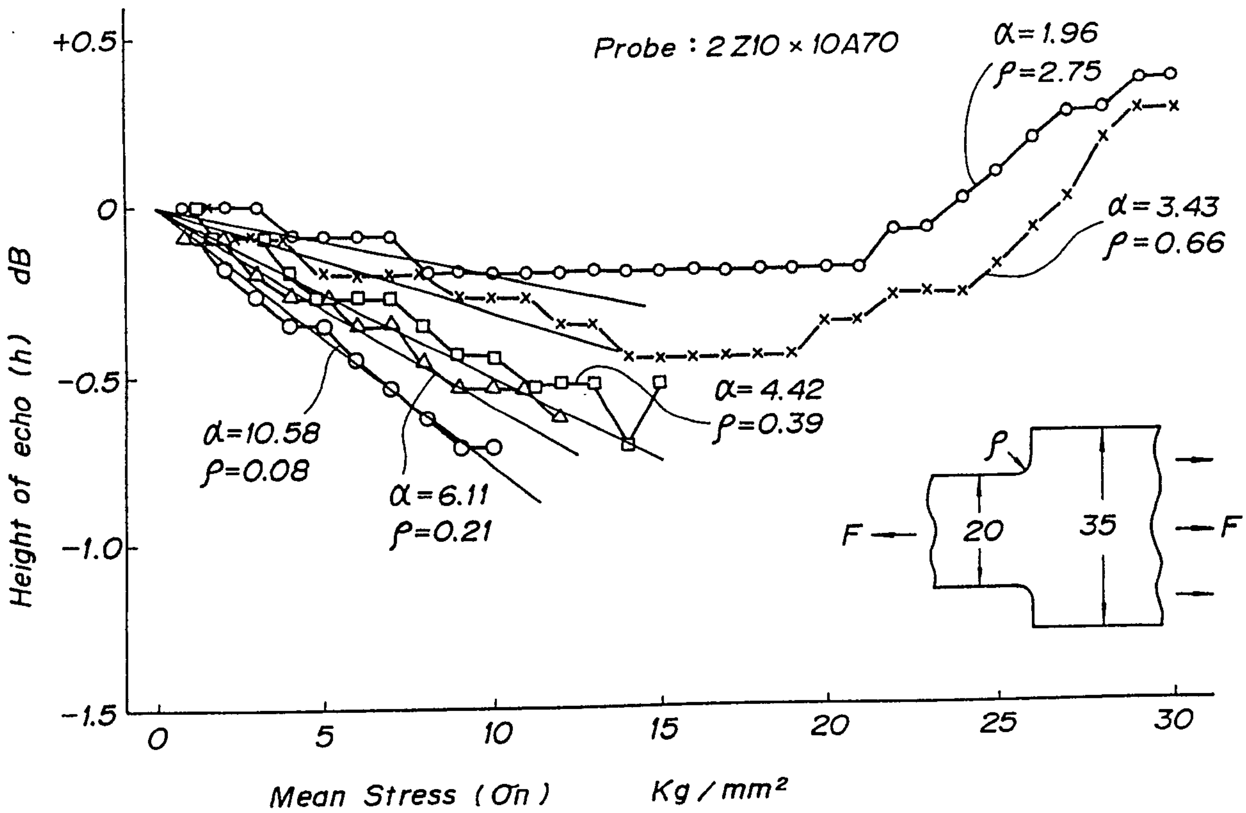
Probe : 2Z10 × 10A70
α=1.96
ρ=2.75
α=3.43
ρ=0.66
α=4.42
ρ=0.39
α=10.58
ρ=0.08
α=6.11
ρ=0.21
ρ
F
20
35
F
+0.5
0
-0.5
-1.0
-1.5
Height of echo (h) dB
0
5
10
15
20
25
30
Mean Stress (σn) Kg/mm²

FIG. 14

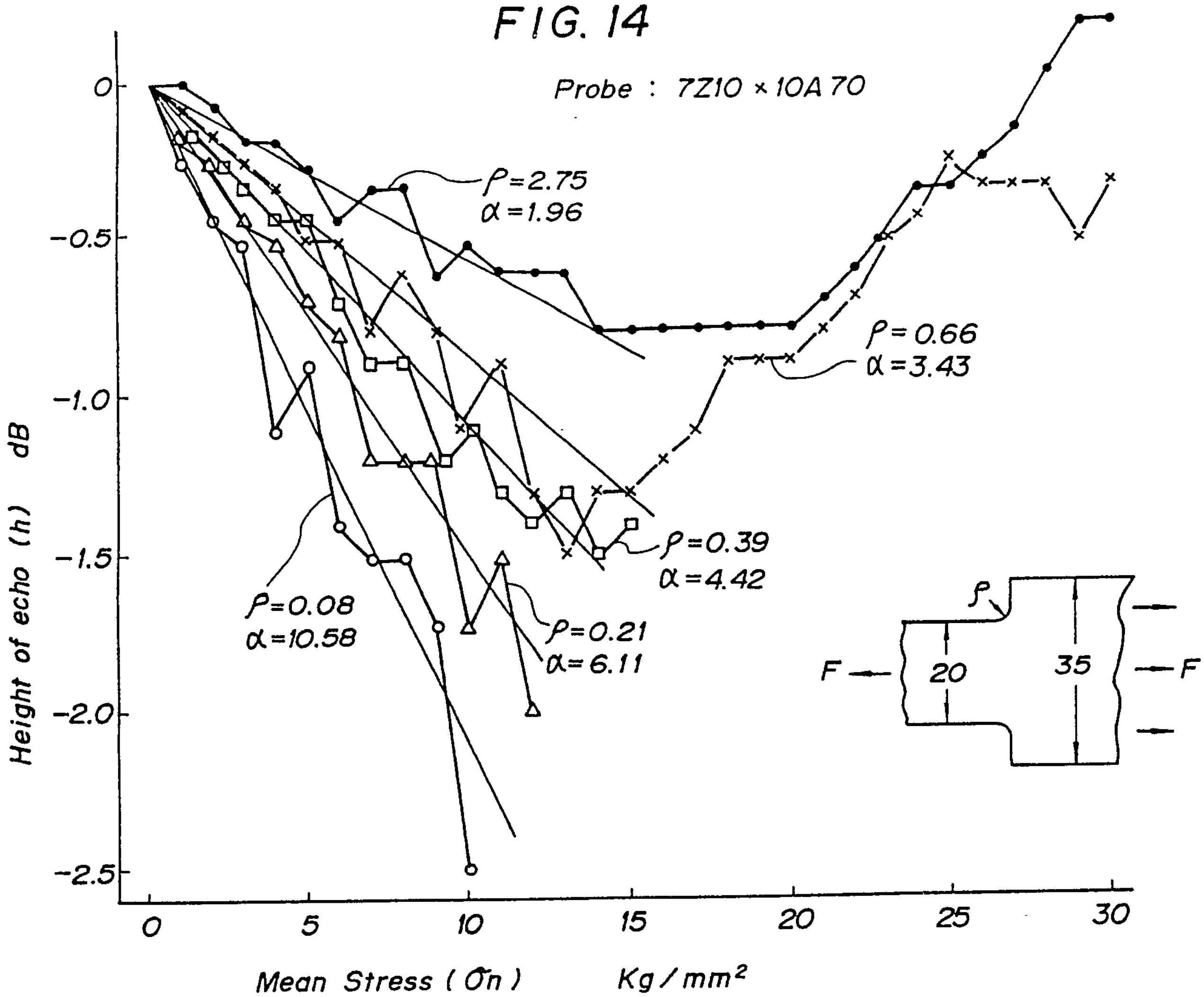
Probe : 7Z10 × 10A 70
0
-0.5
-1.0
-1.5
-2.0
-2.5
Height of echo (h) dB
0
5
10
15
20
25
30
Mean Stress ( σn ) Kg/mm²
ρ=2.75
α=1.96
ρ=0.66
α=3.43
ρ=0.39
α=4.42
ρ=0.08
α=10.58
ρ=0.21
α=6.11
ρ
F
20
35
F

FIG. 15

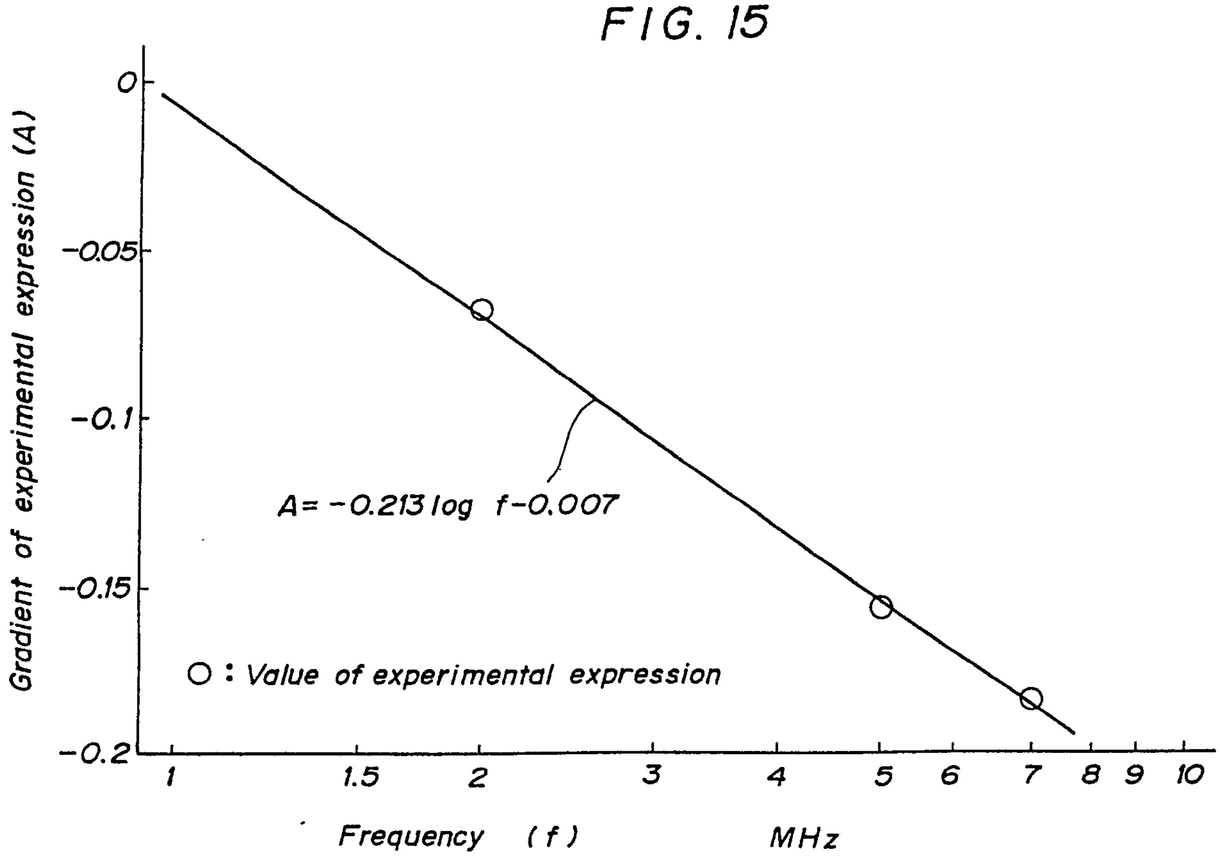
0
-0.05
-0.1
-0.15
-0.2
Gradient of experimental expression (A)
A= -0.213 log f-0.007
○ : Value of experimental expression
1
1.5
2
3
4
5
6
7
8
9
10
Frequency (f) MHz

FIG. 16C

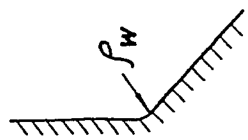


FIG. 16b

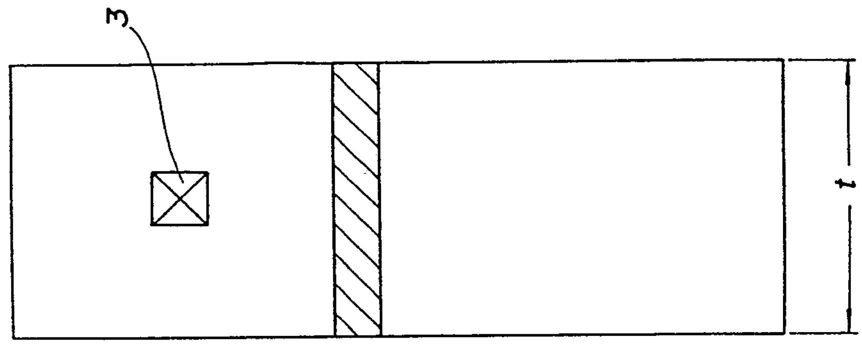


FIG. 16a

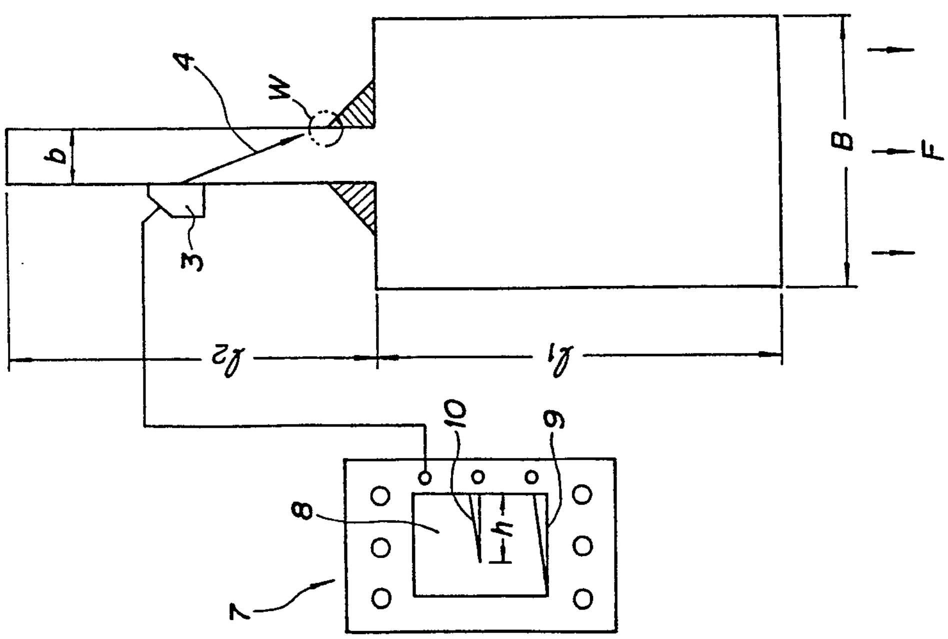

FIG. 17

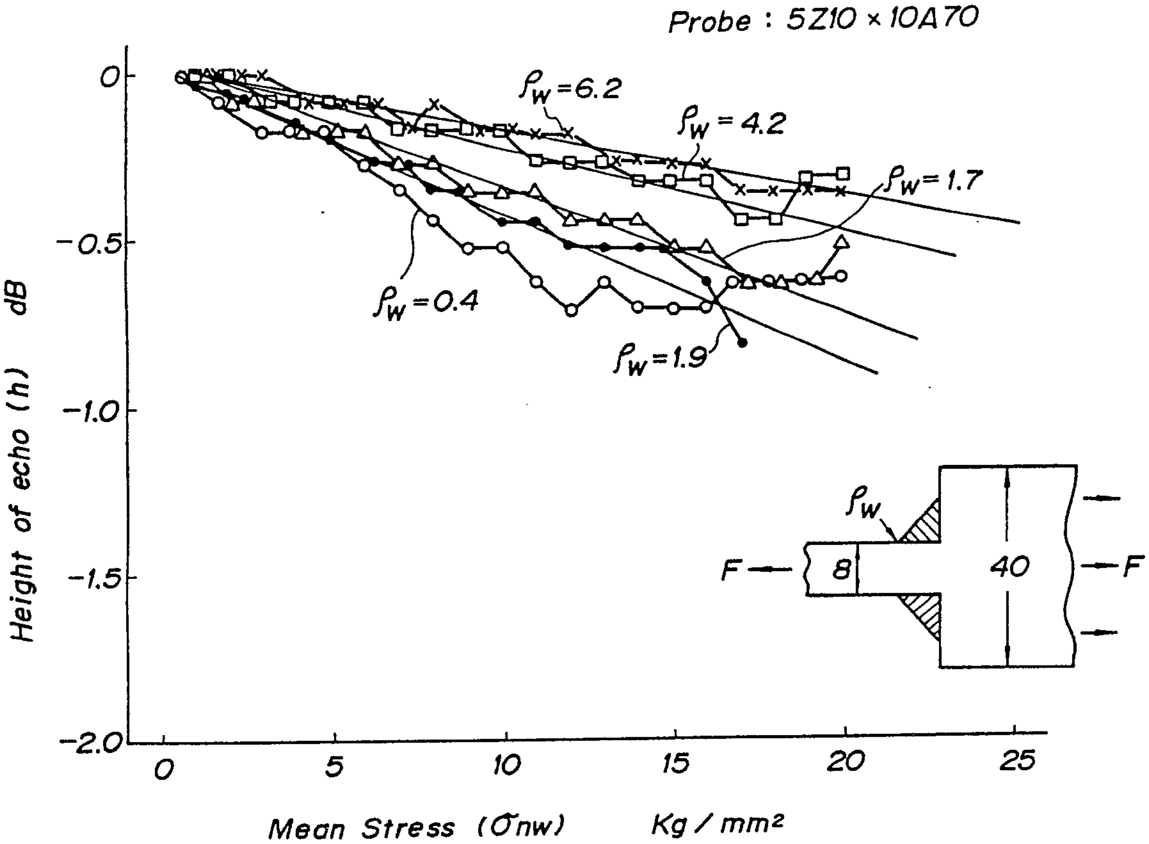
Probe : 5Z10 × 10A70
ρw = 6.2
ρw = 4.2
ρw = 1.7
ρw = 0.4
ρw = 1.9
0
-0.5
-1.0
-1.5
-2.0
Height of echo (h) dB
0
5
10
15
20
25
Mean Stress (σnw) Kg / mm2
ρw
F
8
40
F

FIG. 18

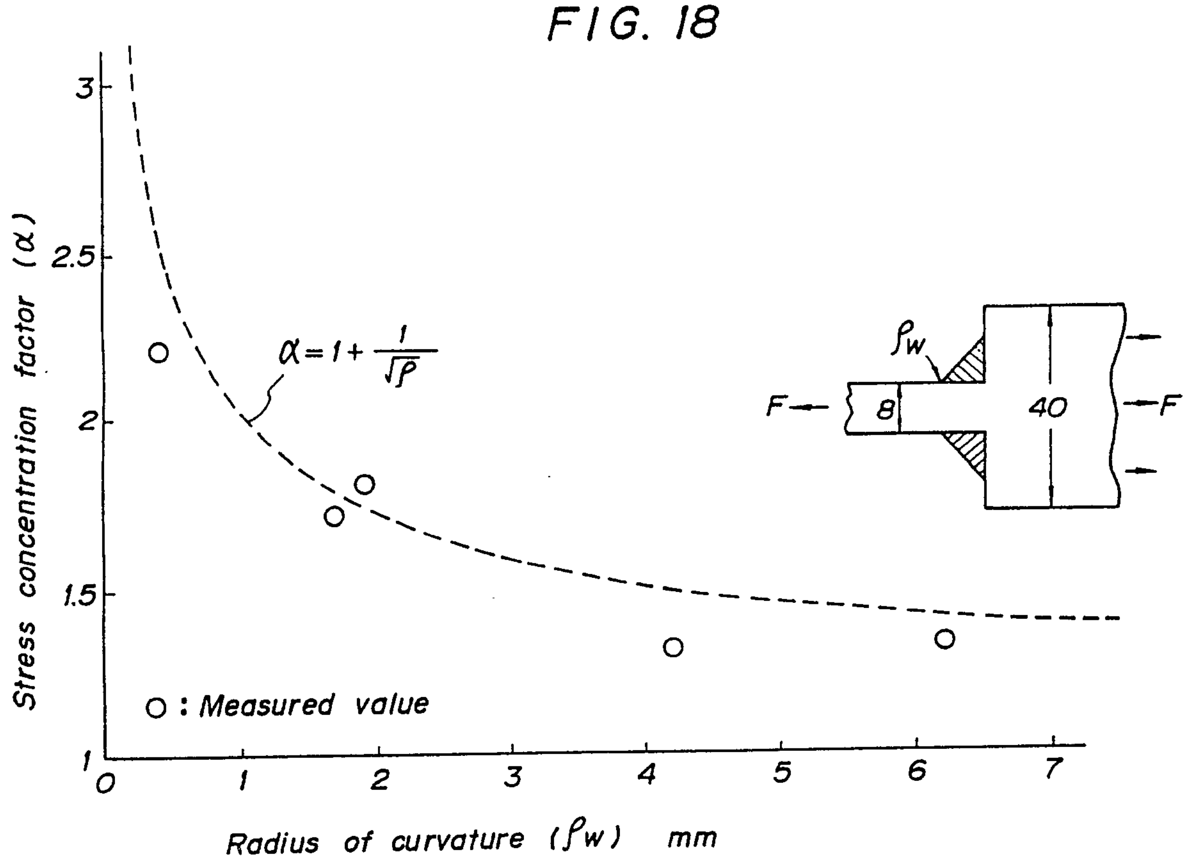
3
2.5
2
1.5
1
Stress concentration factor (α)
$\alpha = 1 + \frac{1}{\sqrt{\rho}}$
○ : Measured value
0
1
2
3
4
5
6
7
Radius of curvature (ρw) mm
ρw
F
8
40
F

FIG. 19c

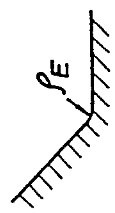


FIG. 19b

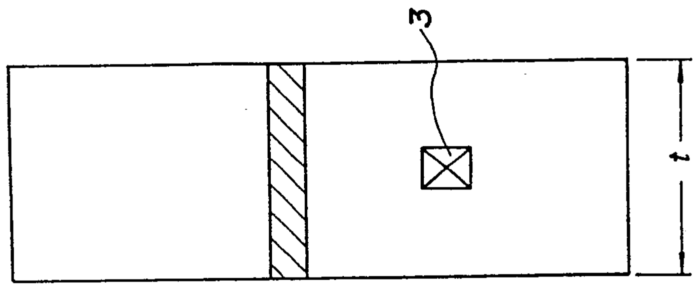


FIG. 19a

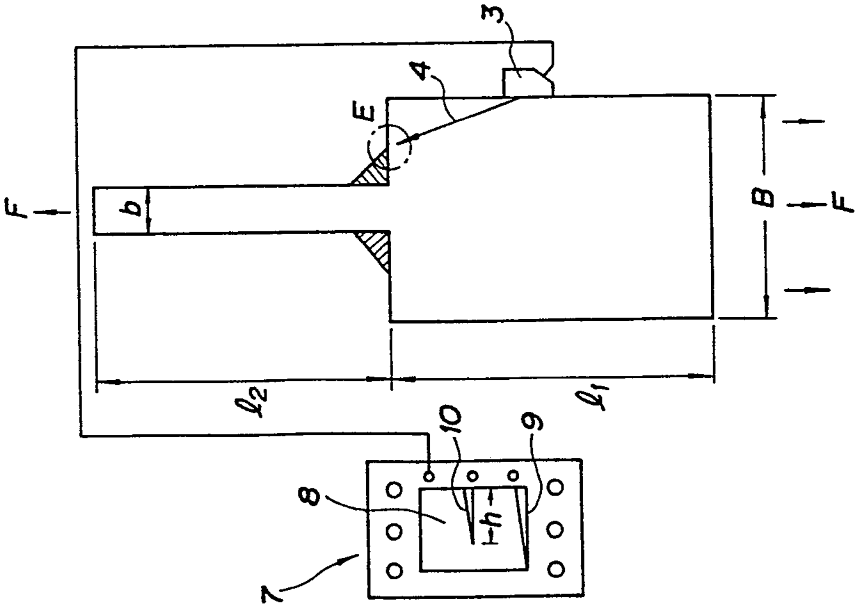

FIG. 20

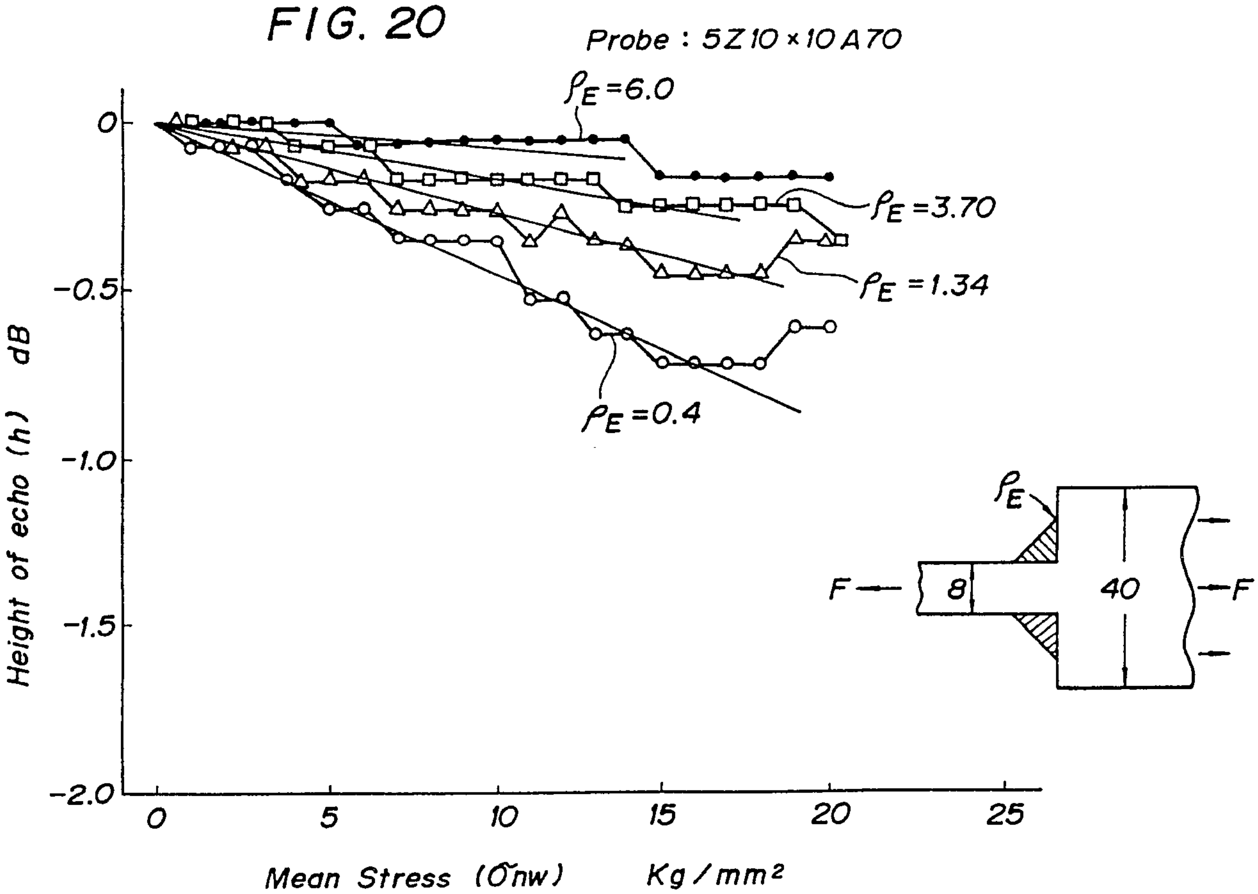

Probe : 5Z10×10A70
ρE=6.0
ρE=3.70
ρE=1.34
ρE=0.4
0
-0.5
-1.0
-1.5
-2.0
Height of echo (h) dB
0
5
10
15
20
25
Mean Stress (σnw) Kg/mm2
ρE
F
8
40
F

FIG. 21

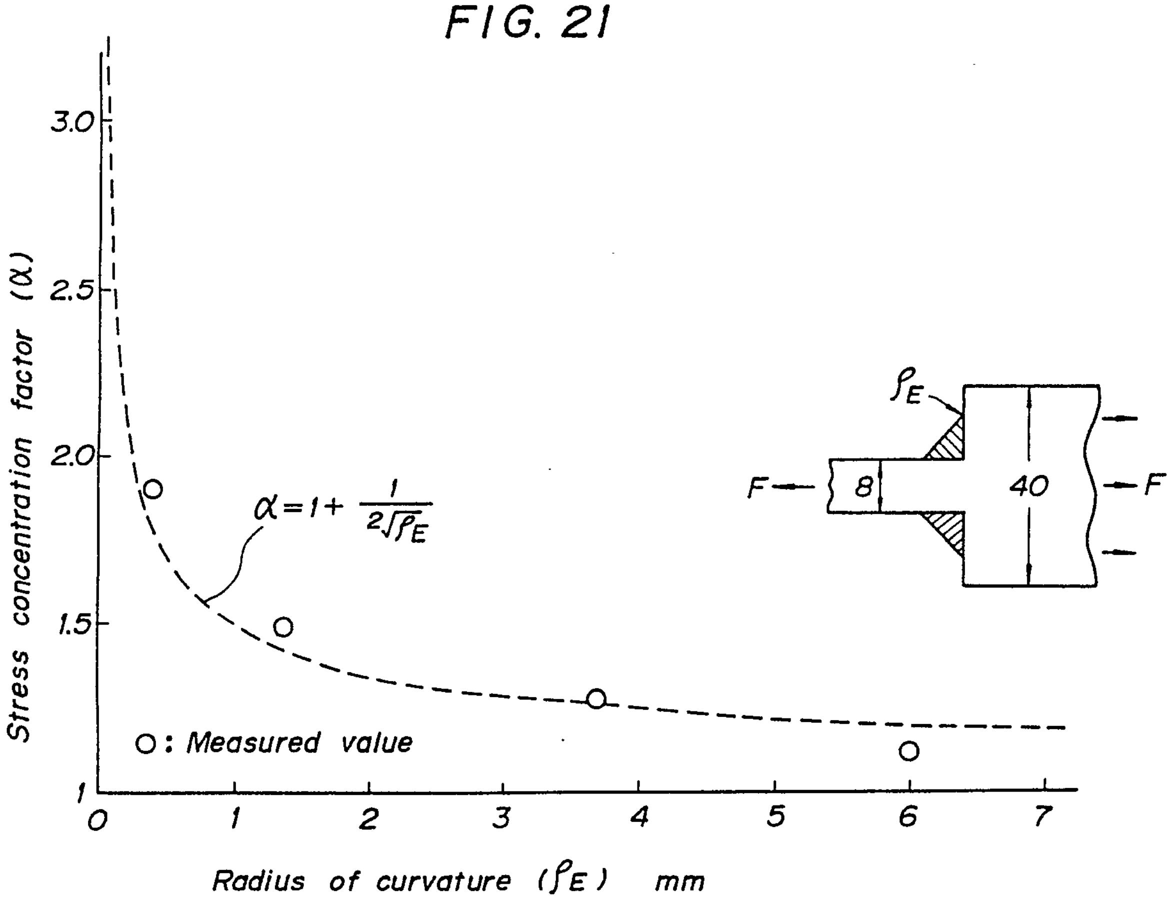
3.0
2.5
2.0
1.5
1
Stress concentration factor (α)
α=1+ 1/(2√ρE)
○ : Measured value
ρE
F
8
40
F
0
1
2
3
4
5
6
7
Radius of curvature (ρE) mm

FIG. 22a

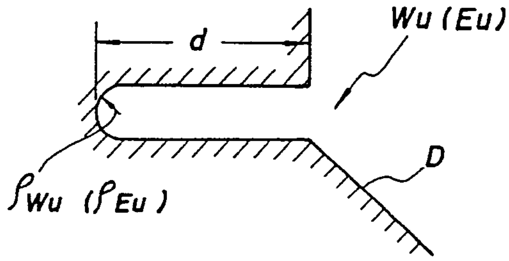


FIG. 22b

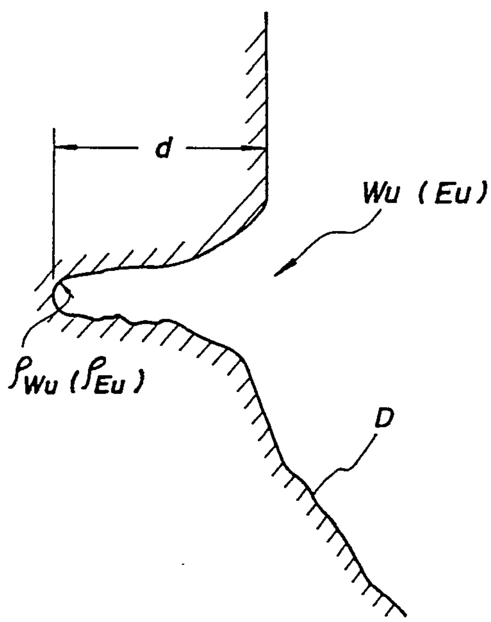

FIG. 23

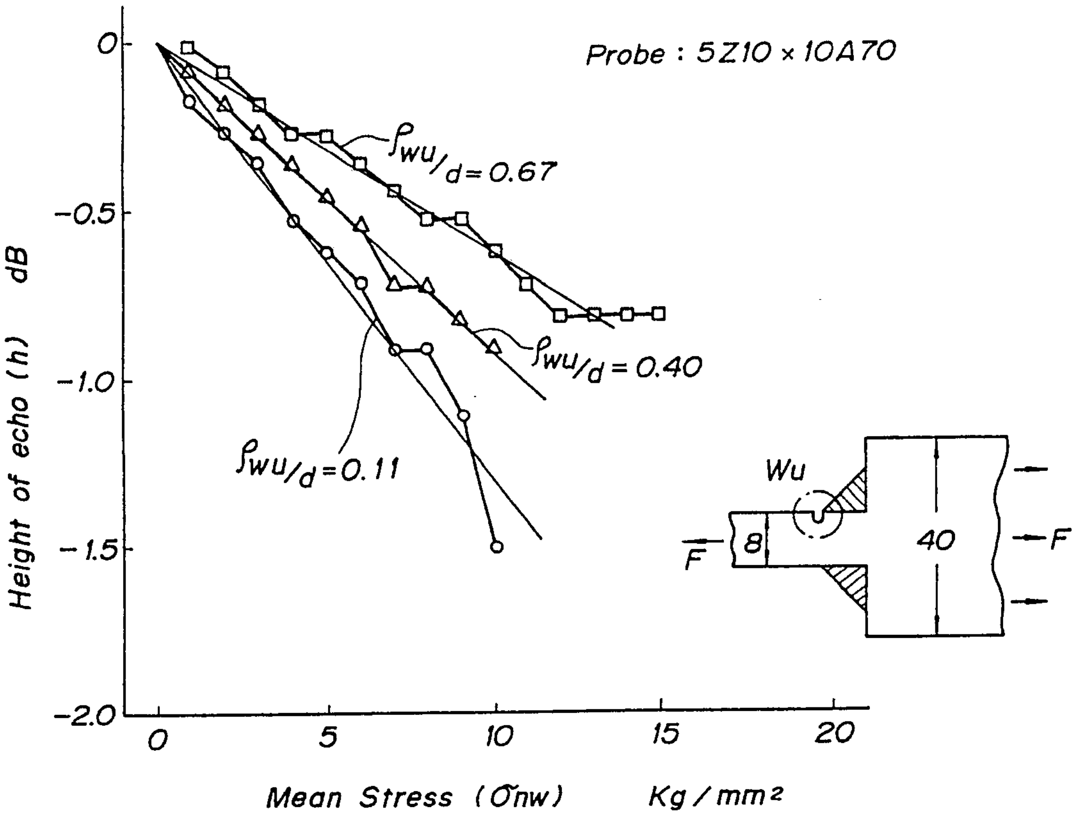
Probe : 5Z10 × 10A70
ρwu/d = 0.67
ρwu/d = 0.40
ρwu/d = 0.11
0
-0.5
-1.0
-1.5
-2.0
Height of echo (h) dB
0
5
10
15
20
Mean Stress (σnw) Kg/mm2
Wu
8
40
F
F

FIG. 24

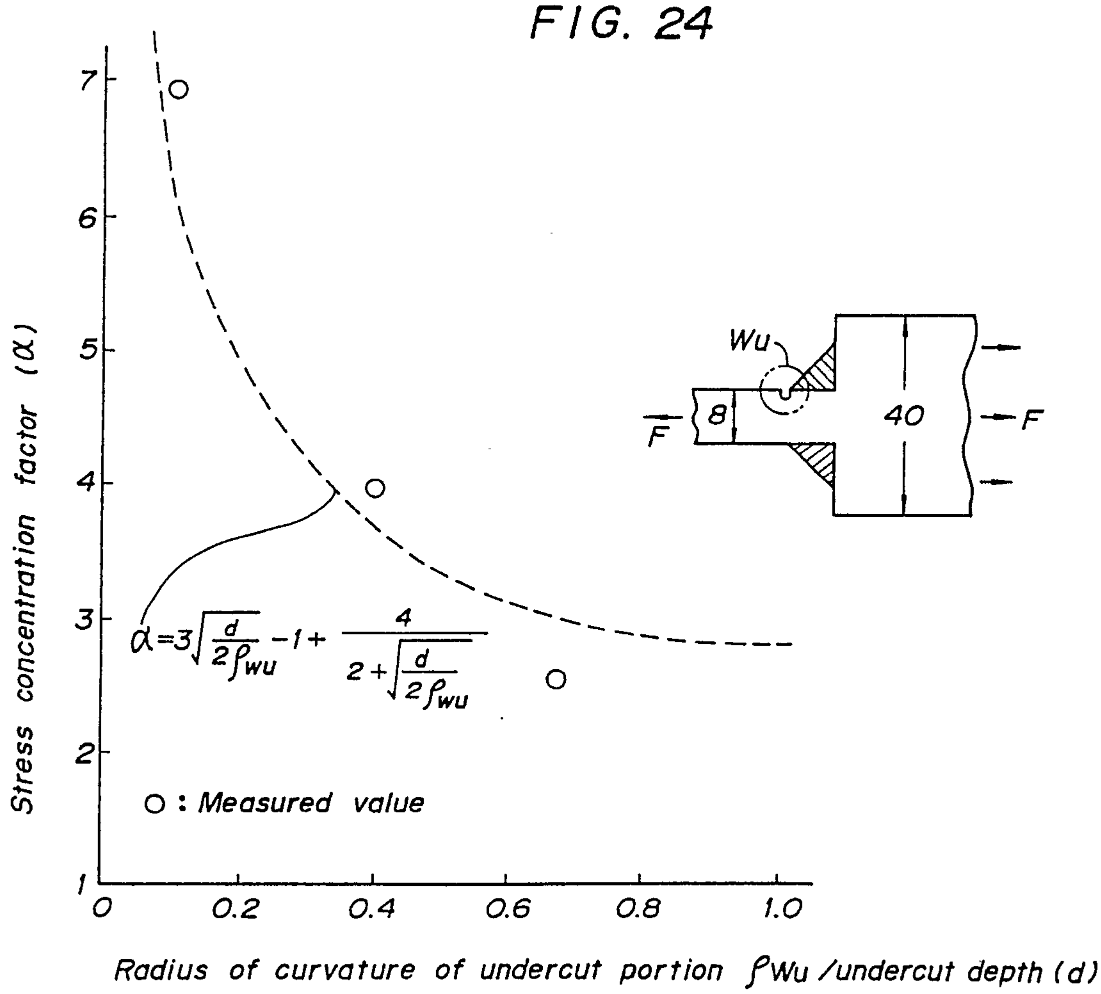
Stress concentration factor (α)
7
6
5
4
3
2
1
0
0.2
0.4
0.6
0.8
1.0
$\alpha=3\sqrt{\frac{d}{2\rho_{wu}}}-1+\frac{4}{2+\sqrt{\frac{d}{2\rho_{wu}}}}$
○ : Measured value
Wu
F
8
40
F
Radius of curvature of undercut portion ρWu /undercut depth (d)

FIG. 25

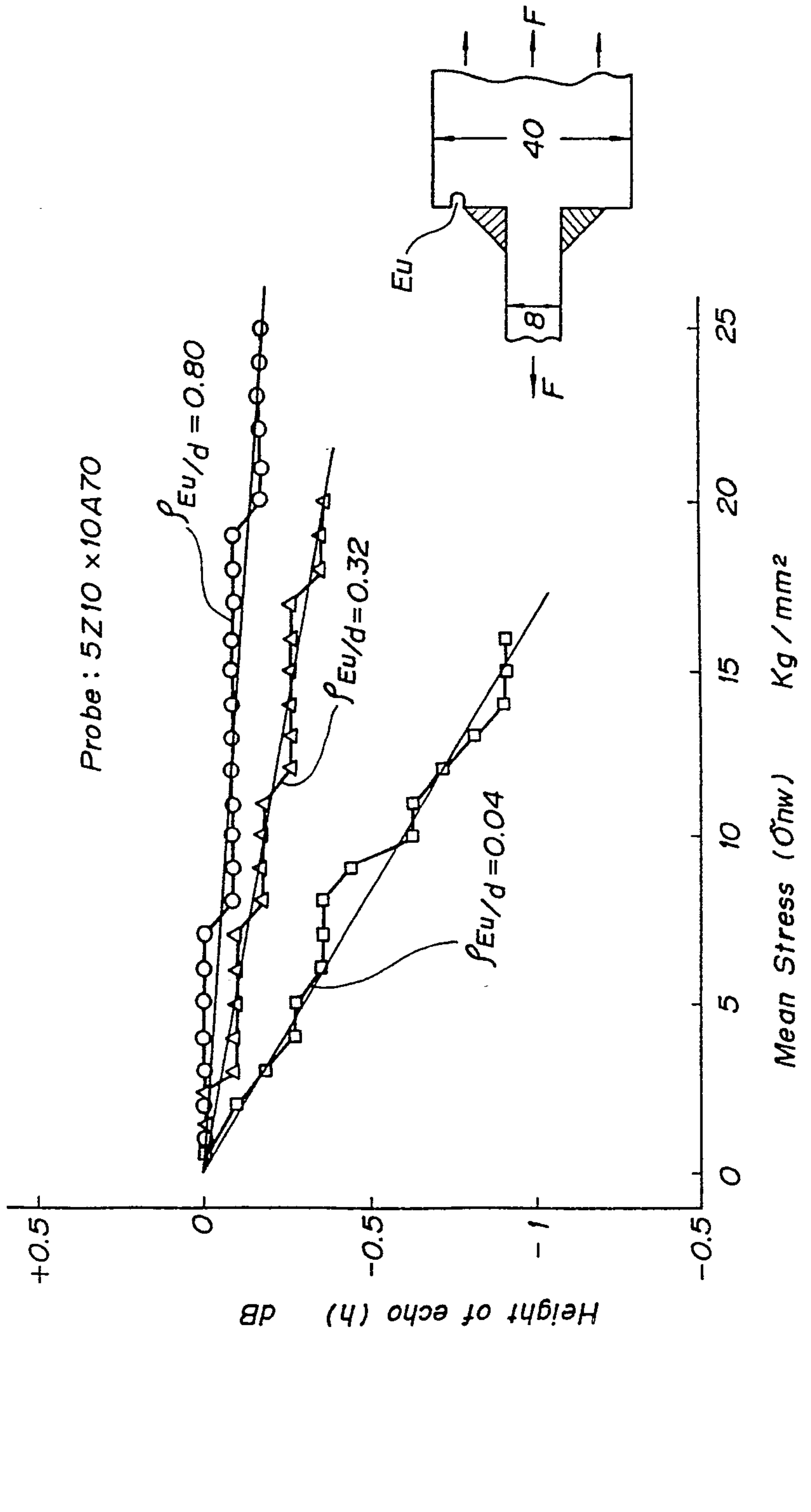
Probe : 5Z10 ×10A70
ρEu/d = 0.80
ρEu/d = 0.32
ρEu/d = 0.04
Eu
40
8
F
F
+0.5
0
-0.5
-1
-0.5
Height of echo (h) dB
0
5
10
15
20
25
Mean Stress (σnw) Kg / mm²

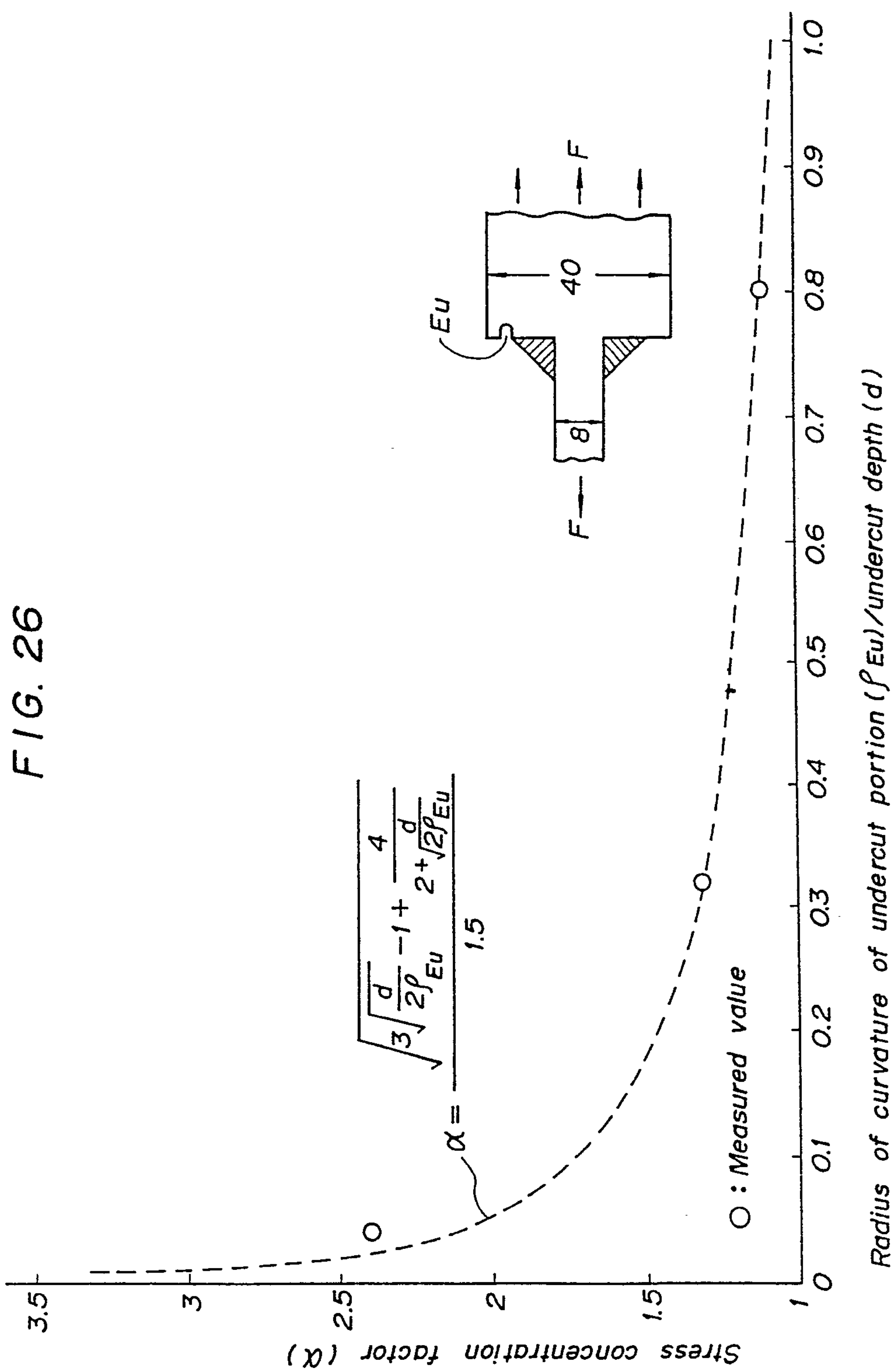


$$\alpha = \frac{\sqrt{3\sqrt{\frac{d}{2\rho_{Eu}}} - 1 + \frac{4}{2 + \frac{d}{\sqrt{2\rho_{Eu}}}}}}{1.5}$$

FIG. 26